# EUROPÄISCHE PATENTANMELDUNG

(11) **EP 4 509 465 A1**
(43) Veröffentlichungstag der Anmeldung: **19.02.2025**
(21) Anmeldenummer: 24179981.6
(22) Anmeldetag: 04.06.2024
(51) Int. Cl.: C02F 1/00, E03B 3/11, E03B 3/14, E03B 3/18, B09C 1/00, C02F 103/06

(54) **VORRICHTUNG UND VERFAHREN ZUR VERWERTUNG VON IN EINEM GRUNDWASSERLEITER GEFÜHRTEN GRUNDWASSER**

(30) Priorität: 04.06.2023 DE 102023114642
(71) Anmelder: UBV Umweltbüro GmbH Vogtland-Erkundung/Planung/Management, 08538 Weischlitz (DE)
(72) Erfinder: DAFFNER, Thomas, 01328 Dresden (DE); LEIBENATH, Carsten, 01259 Dresden (DE); VIERNICKEL, Michael, 12107 Berlin (DE)
(74) Vertreter: Findeisen Neumann Scheit Partnerschaft mbB

(57) **Zusammenfassung**

Die Erfindung betrifft eine Vorrichtung zur Verwertung von in einem Grundwasserleiter geführten Grundwasser durch ein Heben des Grundwassers aus dem Grundwasserleiter und ein nach dem Verwerten anschießendes Reinfiltrieren des Grundwassers in den Grundwasserleiter, wobei die Vorrichtung einen Horizontaltfilterbrunnen aufweist. Aufgabe der Erfindung ist es, ein Verfahren und eine Vorrichtung zum Heben und Infiltrieren von in einem Grundwasserleiter geführten Grundwasser zu schaffen, wobei ein Horizontaltfilterbrunnen ausreicht. Diese Aufgabe wird dadurch gelöst, dass der Horizontaltfilterbrunnen einen in einer ersten Ebene in dem Grundwasserleiter angeordneten ersten Filterstrang und einen in einer oberhalb oder unterhalb der ersten Ebene liegenden zweiten Ebene in dem Grundwasserleiter angeordneten zweiten Filterstrang aufweist und dass der erste Filterstrang und der zweite Filterstrang über eine Zirkulationsleitung miteinander verbunden sind an der eine Wärmetauschanordnung und/oder eine Stoffaustauschanordnung eingebunden ist. (Fig. 1a)

## Beschreibung

Die Erfindung betrifft eine Vorrichtung zur Verwertung von in einem Grundwasserleiter geführten Grundwasser durch ein Heben des Grundwassers aus dem Grundwasserleiter und ein nach dem Verwerten anschließendes Reinfiltrieren des Grundwassers in den Grundwasserleiter, wobei die Vorrichtung einen Horizontaltfilterbrunnen aufweist. Weiterhin betrifft die Erfindung ein Verfahren zur Verwertung von in einem Grundwasserleiter geführten Grundwasser.

Horizontalfilterbrunnen dienen der Wassergewinnung aus einem Grundwasserleiter, wobei die Horizontaltfilterbrunnen hierfür im Grundwasserleiter horizontal verlaufende Rohre (Filterrohre) aufweisen. Die horizontal verlaufenden Rohre (Filterrohre) führen jeweils mit einem Ende zu einem vertikalen Sammelschacht, durch den das von den horizontal verlaufenden Rohren aus dem Grundwasserleiter zugeführte Wasser entnommen wird. Die horizontal verlaufenden Rohre können dabei in unterschiedlichen Ebenen des Grundwasserleiters verlegt sein.

Aus dem Stand der Technik sind Horizontalfilterbrunnen in unterschiedlichen Bauformen bekannt. So gibt es Horizontaltfilterbrunnen in Trockenaufstellung und in Nassaufstellung. Weiterhin sind Horizontaltfilterbrunnen mit einer Druckkammer und/oder einer Ringleitung bekannt. Ein Horizontaltfilterbrunnen mit Ringleitung zur Hebung und Weiterleitung von Grundwasser wird beispielsweise in DE 100 31 593 A1 beschrieben.

Horizontalfilterbrunnen in Trockenaufstellung können mit:
- einzelnen filterstrangbezogenen Förderleitungen / Pumpen / Tauchmantelpumpen oder Heber das Fluid (Grundwasser) heben und es direkt und ohne wechselseitige Fahrweise zwischen den Druckleitungen zum Zielort fördern;
- einzelnen filterstrangbezogenen Förderleitungen / Pumpen / Tauchmantelpumpen oder Heber das Fluid (Grundwasser) heben, über eine Ringleitung /Ringsegment führen und es direkt und mit wechselseitiger Fahrweise zwischen den Filterstranganschlussleitungen-, Saug- und Druckleitungen zum Zielort fördern;
- einzelnen filterstrangbezogenen Förderleitungen in eine Druckkammer führen und über Pumpen / Tauchmantelpumpen oder Heber das Fluid (Grundwasser) heben, und es mit wechselseitiger Fahrweise zwischen den Filterstranganschlussleitungen-, Saug- und Druckleitungen zum Zielort fördern;

In einen Horizontalfilterbrunnen in Trockenaufstellung können dabei die Elemente zur bevorzugten Strömung, beispielsweise fluidführende horizontale Filterelemente, Rohrleitungen oder sonstigen fluidführende Elemente (z.B. Pumpen, Behälter jeglicher Art, Messeinrichtungen) mit den geologisch, hydrogeologisch und filterausbautechnisch bestimmten unterschiedlichen Förderströmen gefahren werden, ohne dass eine Vermischung der geförderten und gegebenenfalls unterschiedlichen Grundwasserbeschaffenheit im Horizontalfilterbrunnen erfolgen muss und dass bestimmte Elemente zur bevorzugten Strömung wie beispielsweise Filterstränge oder Rohrleitungen und / oder Elemente zur Hebung des Grundwassers wie beispielsweise Pumpen für durchzuführende Sanierungszwecke außer Betrieb gehen können bzw. müssen und ohne die Funktionsweise des gesamten Horizontalfilterbrunnen zu beeinträchtigen.

In einen Horizontalfilterbrunnen in Nassaufstellung werden die Elemente zur bevorzugten Strömung, beispielsweise fluidführenden horizontalen Filterelementen, Rohrleitungen oder sonstigen fluidführenden Elementen mit den geologisch, hydrogeologisch und filterausbautechnisch bestimmten unterschiedlichen Förderströmen gefahren. Infolge der direkten Einbindung der Horizontalfilterstränge in den Schacht und dem in der Regel ungesteuerten, ungedrosselten Fluidzutritt in den Schacht kann eine Steuerung der bevorzugten Förderrichtung nicht vorgenommen werden. Sind an der direkten Einbindung der horizontalen Filterstränge in den Schacht Klappen mit Bediengestänge montiert, ist eine strangbezogene Drosselung der Fluidmenge möglich.

Bei weitgehend gleichmächtigem und hydraulisch einheitlich durchlässigem Grundwasserhorizont ist jedoch von einem gleichmäßigen Zustrom auszugehen.

Wenn gleich neu zubauende nassaufgestellte Horizontalfilterbrunnen vorzugsweise in gering verockerungsgefährdeten Grundwasserleitern vorgesehen sind, kann als Stand der Technik auch ein derartiger Ausbau mit den Verfahren zur Verhinderung von Verockerungserscheinungen gem. DE 103 06 119 A1 oder nachträglich mit der Vorrichtung zur Verhinderung von Verockerungserscheinungen auf fluidführenden Elementen an Horizontalfilterbrunnen gem. noch unveröffentlichter DE 10 2022 115 687 A1 versehen werden.

Weiterhin ist aus der DE 20 2006 003 876 U1 eine Vorrichtung zur Erwärmung von Verkehrs- und Nutzflächen bekannt, bei der mittels eines Horizontalfilterbrunnens Grundwasser aus einem Grundwasserleiter gehoben und dieses Grundwasser durch ein unterhalb der Verkehrs- bzw. Nutzfläche verlegtes Rohrsystem geleitet wird. Dabei wird die im Grundwasser gespeicherte Wärme (zumindest teilweise) an die Verkehrs- bzw. Nutzfläche übertragen. Anschließend wird das durch das unterhalb der Verkehrs- bzw. Nutzfläche verlegte Rohrsystem geführte Grundwasser durch einen weiteren Horizontalfilterbrunnen wieder in den Grundwasserleiter infiltriert. Durch Nutzung der im Grundwasser gespeicherten Wärmeenergie eignet sich diese Vorrichtung damit beispielsweise als Rasenheizung, um einen Rasen im Winter frostfrei zu halten. Es ist allerdings nachteilig, dass bei dieser Vorrichtung zum Heben und Infiltrieren von in einem Grundwasserleiter geführten Grundwasser mindestens zwei Horizontalfilterbrunnen benötigt werden. Dies ist insbesondere bei der Installation der Vorrichtung mit einem großen Aufwand verbunden.

In der praktischen Anwendung (so z.B. in Deutschland, USA, Italien, Frankreich) haben sich Grundwasserzirkulationsbrunnen (GZB) mittels Vertikalfilterbrunnen etabliert. Stellvertretend sei auf die Veröffentlichung der Landesanstalt für Umweltschutz Baden-Württemberg, Kalsruhe 1993, Verfasser K. Zipfel, L. Kirschbauer TGU technolieberatung Grundwasser und Umwelt GmbH und dem Technischen Bericht Nr. 2007 / 017 (VEG 28) Bestimmung der hydraulischen Wirksamkeit eines Grundwasserzirkulationsbrunnens "Testfeld Süd" mittels Tracerversuch (02WN0363 (KORA TV2.4 c) verwiesen.

Diese Lösung (GZB) bietet sich vorzugsweise da an, wo eine große Grundwasserleitermächtigkeit und das Errichten vergleichsweise zum Horizontalfilterbrunnen sehr vielen Grundwasserzirkulationsbrunnen (GZB) zu errichten und zu betreiben möglich und wirtschaftlicher ist. Die Errichtung einer Vielzahl von GZB innerstädtisch stößt häufig an praktisch umsetzbare Grenzen durch bestehende Bebauung und vorhandene unterirdische Infrastruktur. Auch sind die Verfügbarkeit der Flächen und die Erschließungsleistungen bei vielen GZB innerstädtisch oftmals limitierend.

Aufgabe der Erfindung ist es, ein Verfahren und eine Vorrichtung zum Heben und Infiltrieren von in einem Grundwasserleiter geführten Grundwasser zu schaffen, wobei ein Horizontaltfilterbrunnen ausreicht.

Diese Aufgabe wird mit einem Verfahren mit den Merkmalen des Anspruchs 1 gelöst. Das Verfahren zur Verwertung von in einem Grundwasserleiter geführten Grundwasser mittels eines Horizontaltfilterbrunnens sieht vor, dass zunächst Grundwasser aus dem Grundwasserleiter über einen in einer ersten Ebene in dem Grundwasserleiter angeordneten ersten Filterstrang des Horizontaltfilterbrunnens gehoben wird und dieses gehobene Grundwasser über eine Zirkulationsleitung einer Wärmetauschanordnung und/oder einer Stoffaustauschanordnung zugeführt wird und anschließend das über die Wärmetauschanordnung und/oder die Stoffaustauschanordnung geführte Grundwasser einen in einer oberhalb oder unterhalb der ersten Ebene liegenden zweiten Ebene in dem Grundwasserleiter angeordneten zweiten Filterstrang zugeführt und wieder in den Grundwasserleiter reinfiltriert wird.

Neben dem ersten Filterstrang in der ersten Ebene können auch weitere Filterstränge in der ersten Ebene vorgesehen sein. Weiterhin können auch in der zweiten Ebene neben dem zweiten Filterstrang auch weitere Filterstränge vorgesehen sein.

Bei dem erfindungsgemäßen Verfahren ist damit nur ein Horizontaltfilterbrunnen nötig.

Grundsätzlich ist es unerheblich, ob die erste Ebene oberhalb oder unterhalb der zweiten Ebene angeordnet ist. Das heißt, dass in einer Ausführung das in einer Ebene aus dem Grundwasserleiter gehobene Grundwasser in einer höher liegenden Ebene wieder in den Grundwasserleiter reinfiltriert wird. Ebenso kann in einer anderen Ausführung das in einer Ebene aus dem Grundwasserleiter gehobene Grundwasser auch in einer darunter liegenden Ebene wieder in den Grundwasserleiter reinfiltriert wird.

In einer Ausführung wird dem Grundwasser mit der Wärmetauschanordnung Wärmeenergie entnommen oder zugeführt.

Gehobenes Grundwasser kann damit thermisch zur Wärmebereitstellung genutzt werden, indem die über die Wärmetauschanordnung aus dem gehobenen Grundwasser entnommene Wärmeenergie einer Weiternutzung zugeführt wird. Das abgekühlte gehobene Grundwasser wird dann wieder in den Grundwasserleiter eingeleitet.

In einer alternativen Nutzung kann das gehobene Grundwasser thermisch zur Kältebereitstellung genutzt werden, indem über die Wärmetauschanordnung externe Wärmeenergie an das gehobene Grundwasser übertragen wird. Das erwärmte gehobene Grundwasser wird dann wieder in den Grundwasserleiter eingeleitet. Das auf diese Weise gehobene und re-infiltrierte Grundwasser kann damit thermisch zur Kühlung oder Abwärme- bzw. Solarenergienutzung verwendet werden.

Es wird vorgeschlagen, dass durch eine messtechnische Erfassung der Grundwassertemperatur im Grundwasserleiter eine Wärmeentnahme und Wärmezufuhr zum Grundwasser im Grundwasserleiter im langfristigen Mittel thermisch so gestaltet wird, dass eine Grundwassertemperatur im Grundwasserleiter innerhalb eines Temperaturbereichs gehalten wird. Somit kann eine stetige (ungewollte) Erniedrigung oder Erhöhung der Grundwassertemperatur vermieden werden. Ebenso kann die Wärmeentnahme und Wärmezufuhr zum Grundwasser im Grundwasserleiter im langfristigen Mittel thermisch auch so gestaltet werden, dass eine vorgegebene Temperaturveränderung erreicht wird. Dies kann beispielsweise zur Rückbildung urbaner Wärmeinseleffekte genutzt werden. Im langfristigen Mittel wird in diesem Sinne beispielsweise ein Jahresmittel verstanden.

Die messtechnische Erfassung der Grundwassertemperatur erfolgt vorzugsweise durch Messung der Grundwassertemperatur des gehobenen Grundwassers.

Eine weitere Ausgestaltung sieht vor, dass dem Grundwasser mit der Stoffaustauschanordnung ein Stoff entnommen oder zugeführt wird.

Selbstverständlich ist in einer weiteren Ausführung auch eine Kombination aus Wärmetausch und Stoffaustausch möglich.

Es wird vorgeschlagen, dass der aus dem Grundwasser entnommene Stoff als Rohstoff extrahiert wird.

Weiterhin wird vorgeschlagen, dass der dem Grundwasser zugeführte Stoff eine Dekontamination und/oder Rohstoffgewinnung aus einer Feststoffmatrix und/oder einer anderen Fluidphase des Grundwassers mobilisiert.

In einer Ausführung ist der eine Dekontamination mobilisierende Stoff ein in dem Grundwasser mikrobielle Prozesse stimulierender Stoff, der natürliche Abbauprozesse zur Altlastensanierung anregt oder verstärkt.

In einer weiteren Ausführung ist der dem Grundwasser zugeführte Stoff Sauerstoff, der im Bereich des zweiten Filterstrangs in dem Grundwasserleiter Eisen- oder Manganausfällung induziert.

In einer weiteren Ausführung wird dem Grundwasser hochtemperierte Wärme zugeführt, der im dadurch erhitzten Bereich gebundene Stoffe mobilisiert.

Zur Durchführung des erfindungsgemäßen Verfahrens wird eine Vorrichtung mit den Merkmalen des Anspruchs 9 gelöst. Bei dieser Vorrichtung zur Verwertung von in einem Grundwasserleiter geführten Grundwasser durch ein Heben des Grundwassers aus dem Grundwasserleiter und ein nach dem Verwerten anschießendes Reinfiltrieren des Grundwassers in den Grundwasserleiter wird ein Horizontaltfilterbrunnen eingesetzt. Dieser Horizontaltfilterbrunnen weist einen in einer ersten Ebene in dem Grundwasserleiter angeordneten ersten Filterstrang und einen in einer oberhalb oder unterhalb der ersten Ebene liegenden zweiten Ebene in dem Grundwasserleiter angeordneten zweiten Filterstrang auf. Der erste Filterstrang und der zweite Filterstrang (Filterstränge) sind über eine Zirkulationsleitung miteinander verbunden, wobei in der Zirkulationsleitung eine Wärmetauschanordnung und/oder eine Stoffaustauschanordnung eingebunden ist.

Auch bei dem erfindungsgemäßen Verfahren können neben dem ersten Filterstrang in der ersten Ebene auch weitere Filterstränge in der ersten Ebene vorgesehen sein. Weiterhin können auch in der zweiten Ebene neben dem zweiten Filterstrang auch weitere Filterstränge vorgesehen sein.

In einer Ausführung ist die Wärmetauschanordnung als Gegenstromwärmetauscher oder als Wärmepumpe ausgestaltet.

Eine weitere Ausführung sieht vor, dass die Stoffaustauschanordnung ausgebildet ist, einen in dem Grundwasser enthaltenen Stoff zu entnehmen oder dem Grundwasser einen Stoff zuzuführen.

Damit kann durch gezielten Eintrag von Substanzen die Grundwasserqualität verbessert werden. Beispielsweise kann durch Sauerstoffeintrag eine untertägige Ausfällung von z.B. gelöstem Eisen und Mangan induziert werden ("in situ Enteisenung") und dadurch Verockerung im Brunnenkreislauf und an den Filtersträngen vermieden werden. Ein weiteres Beispiel ist die Altlastensanierung durch Förderung natürlicher Schadstoffabbauprozesse durch Zugabe von z.B. Melasse, Lactat, etc..

Im Ergebnis wird damit ein Horizontalfilter-Zirkulationsbrunnen (HZBr) gebildet, wobei das mit dem Horizontalfilterbrunnen aus dem Grundwasserleiter entnommene Grundwasser mit demselben Horizontalfilterbrunnen wieder in den Grundwasserleiter zurückgeführt wird. Das gehobene und wieder reinfiltrierte Grundwasser kann dann mittels der Wärmetauschanordnung und/oder der Stoffaustauschanordnung gezielt verwertet werden. Beispielsweise können zur Grundwasser-Altlastensanierung mittels der Stoffaustauschanordnung bestimmte Stoff aus dem Grundwasser entnommen werden. Ebenso können zur Rohstoffgewinnung mittels der Stoffaustauschanordnung auch Rohstoffe aus dem gehobenen Grundwasser entnommen werden. Weiterhin können zum mikrobiellen Abbau von Kontaminanten im Grundwasser oder an den Filtersträngen mittels der Stoffaustauschanordnung dem gehobenen Grundwasser den mikrobiellen Abbau stimulierende Substanzen zugeführt werden. Ebenso kann mittels der Wärmetauschanordnung zur Wärmenutzung dem gehobenen Grundwasser Wärme entzogen oder für Kühlanwendungen dem gehobenen Grundwasser Wärme zugeführt werden.

Durch die Entnahme von Grundwasser und mengengleichen Reinfiltration in den Grundwasserleiter mit demselben Horizontaltfilterbrunnen wird eine laterale Verlagerung von Grundwasser vermieden und eine nur sehr geringe Grundwassererhöhung bzw. Grundwasserabsenkung induziert, was insbesondere die Errichtung und den Betrieb derartiger Horizontaltfilterbrunnen innerstädtisch ermöglicht. Ein Bau und Betrieb sind jedoch auch außerhalb infrastrukturell stark erschlossener und frequentierter Gebiete möglich.

Ein weiterer Vorteil besteht darin, dass infolge der in Grundwasserleitern üblichen vertikalen Anisotropie ein über die Länge der Filterstränge hinausgehender Wirkungsradius erschlossen wird. Darüber hinaus wird durch die vertikale Grundwasserzirkulation ein hydraulisch weitgehend in sich geschlossenes Volumen genutzt, in dem sich ein einheitliches Milieu einstellen wird und damit Alterungserscheinungen minimiert werden.

Darüber hinaus ist die erfindungsgemäße Zirkulation des Grundwassers mit geringen Energiekosten für die Grundwasserhebung verbunden, da mit der Reinfiltration der natürliche Pumpenvordruck anliegt. Lediglich die Verluste aus der Gesteinsdurchlässigkeit, Filterwiderstand, Rohrreibung und der Wärmetauscher, sowie ggf. der Grundwasseraufbereitung fallen an.

Ebenso ist es vorteilhaft, dass durch eine ausgeglichene alternierende thermische Nutzung des Grundwassers in Form eines Wärmeeintrags zur Kühlung, direkt oder mittels Kältemaschine und in Form eines Wärmeentzugs zur Wärmenutzung, direkt über Wärmetauscher z.B. in einer Wärmepumpe bei erfindungsgemäßem Betrieb langfristig zu keiner thermischen Grundwasserdegradierung führt und Wärmespeicherung stattfinden kann.

Es wird vorgeschlagen, dass der Horizontaltfilterbrunnen in Trockenaufstellung oder in Nassaufstellung ausgeführt ist.

In einer weiteren Ausführung ist der Horizontaltfilterbrunnen als Kombination aus Trockenaufstellung und Nassaufstellung ausgeführt ist, wobei der erste Filterstrang in Trockenaufstellung und der zweite Filterstrang in Nassaufstellung ausgeführt, wobei der erste Filterstrang in Nassaufstellung und der zweite Filterstrang in Trockenaufstellung ausgeführt sind.

Es wird vorgeschlagen, dass bei einer Trockenaufstellung der jeweilige Filterstrang über eine auf dem Niveau des Grundwasserleiters liegende Ringleitung mit der Zirkulationsleitung oder über eine direkte Rohranbindung mit der Zirkulationsleitung verbunden ist.

Die Anbindung über eine Ringleitung hat den Vorteil, dass im Falle mehrerer Filterstränge in einer Ebene bei der Sanierung einzelner Filterstränge nicht die gesamte Anlage außer Betrieb gehen muss, oder dass die Funktionsweise des gesamten Horizontalfilterbrunnens dabei beeinträchtigt wird.

Durch den Einsatz einer Ringleitung wird damit eine absolut flexible und verbesserte Förderung und Reinfiltration gehobenen ggf. verockerungsgefährdeten Fluids (Grundwassers) unter Ausschluss atmosphärischen Sauerstoffzutritts innerhalb eines Horizontalfilter-Zirkulationsbrunnens in Trockenaufstellung mit geohydraulisch und hydraulisch begründeter Anzahl von Schiebern, Ausbaustücken und Pumpen gem. Patent DE 100 31 593 A1 oder von geeigneten Druckkammern erreicht, wie sie beispielhaft am Horizontalfilterbrunnen HBr 6 in Senftenberg oder an den vier Horizontalfilterbrunnen HOBO 8.1 bis HOBO 8.4 in Leiden errichtet wurden, die gleichermaßen keinen atmosphärischen Sauerstoff zum Fluid lassen und dies gegebenenfalls mit oder ohne gleichzeitiger Anwendung des Verfahrens zur Verhinderung von Verockerungserscheinungen gemäß Patent DE 103 06 119 A1 gekoppelt sind.

Weiterhin wird vorgeschlagen, dass die Filterstränge bezogen auf die Waagerechte horizontal oder schräg in dem Grundwasserleiter angeordnet sind.

In einer vorteilhaften Ausführung ist vorgesehen, dass die Zirkulationsleitung eine mit dem ersten Filterstrang verbundene erste Druckleitung, eine mit dem ersten Filterstrangverbundene erste Reinfiltrationsleitung, eine mit dem zweiten Filterstrang verbundene zweite Druckleitung und eine mit dem zweiten Filterstrang verbundene zweite Reinfiltrationsleitung aufweist und dass die erste Druckleitung, die zweite Druckleitung, die erste Reinfiltrationsleitung und die zweite Reinfiltrationsleitung mit der Wärmetauschanordnung und/oder der Stoffaustauschanordnung verbunden sind.

Es wird vorgeschlagen, dass in der Zirkulationsleitung und/oder der ersten Druckleitung und/oder der zweiten Druckleitung und/oder der ersten Reinfiltrationsleitung und/oder der zweiten Reinfiltrationsleitung und/oder in mit den vorgenannten Leitungen verbundenen weiteren Leitungen oder Behältervorrichtungen Messinstrumente zur Erfassung der Menge und/oder der Temperatur und/oder des Drucks und/oder der Stromstärke und/oder anderer Stoffparameter und/oder physikalischer Größen vorgesehen sind.

Nachfolgend werden Ausführungsbeispiele der Erfindung anhand der Zeichnungen erläutert. Es zeigen:

| | |
|---|---|
| Fig. 1a | Gesamtansicht eines erfindungsgemäßen Horizontalfilter-Zirkulationsbrunnens (HZBr) in Trockenaufstellung mit zwei Ringleitungen und Kreiselpumpen |
| Fig. 1b | eine Detailansicht eines unteren Bereichs des HZBr gemäß Fig. 1a |
| Fig. 1c | eine Detailansicht eines mittleren Bereichs des HZBr gemäß Fig. 1a |
| Fig. 1d | eine Detailansicht eines oberen Bereichs des HZBr gemäß Fig. 1a |
| Fig. 2a | Gesamtansicht eines erfindungsgemäßen Horizontalfilter-Zirkulationsbrunnens (HZBr) in Trockenaufstellung mit einer Druckkammer und einer Ringleitung und Kreiselpumpen |
| Fig. 2b | eine Detailansicht eines unteren Bereichs des HZBr gemäß Fig. 2a |
| Fig. 2c | eine Detailansicht eines mittleren Bereichs des HZBr gemäß Fig. 2a |
| Fig. 2d | eine Detailansicht eines oberen Bereichs des HZBr gemäß Fig. 2a |
| Fig. 3a | Gesamtansicht eines erfindungsgemäßen Horizontalfilter-Zirkulationsbrunnens (HZBr) in Nassaufstellung mittels Unterwassermotorpumpen in freier Grundwasser-oberfläche innerhalb des Brunnenschachtes |
| Fig. 3b | eine Detailansicht eines unteren Bereichs des HZBr gemäß Fig. 3a |
| Fig. 3c | eine Detailansicht eines unteren Bereichs des HZBr gemäß Fig. 3a |
| Fig. 3d | eine Detailansicht eines unteren Bereichs des HZBr gemäß Fig. 3a |
| Fig. 4a | eine Gesamtansicht eines erfindungsgemäßen Horizontalfilter-Zirkulationsbrunnen (HZBr) in Kombination einer Trocken- und |
| | Nassaufstellung mittels Ringleitung, Kreisel- und Unterwassermotorpumpen in freier Grundwasser-oberfläche innerhalb des Brunnenschachtes |
| Fig. 4b | eine Detailansicht eines unteren Bereichs des HZBr gemäß Fig. 4a |
| Fig. 4c | eine Detailansicht eines unteren Bereichs des HZBr gemäß Fig. 4a |
| Fig. 4d | eine Detailansicht eines unteren Bereichs des HZBr gemäß Fig. 4a |

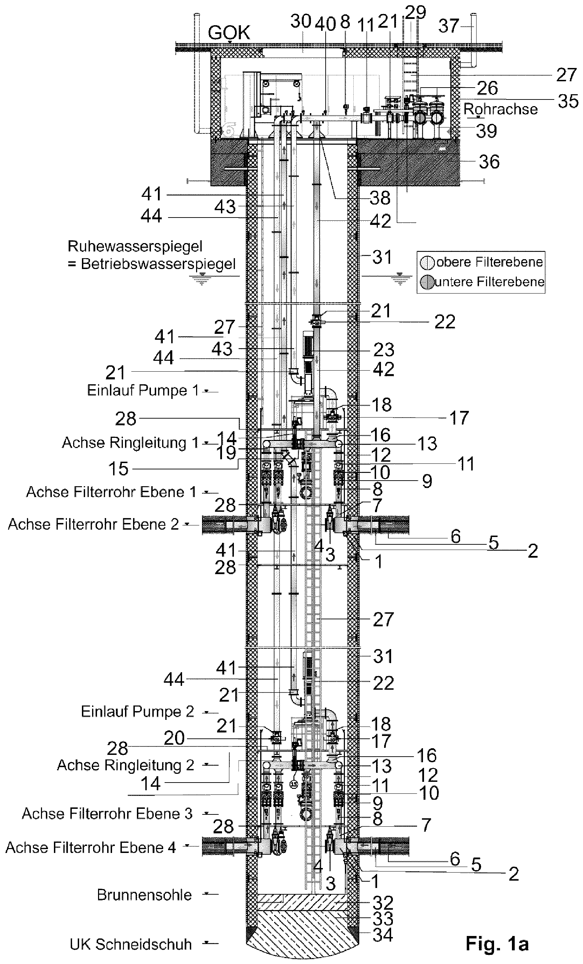

**Fig. 1a** zeigt eine Gesamtansicht eines erfindungsgemäßen Horizontalfilter-Zirkulationsbrunnens (HZBr) in Trockenaufstellung mit zwei Ringleitungen und Kreiselpumpen.

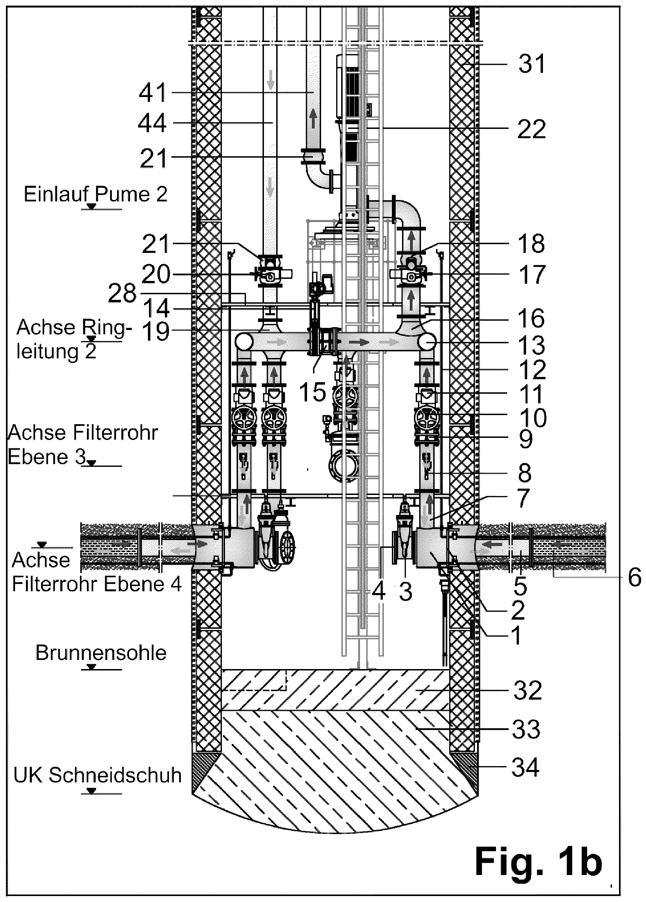

**Fig. 1b** zeigt eine Detailansicht eines unteren Bereichs des HZBr in Trockenaufstellung gemäß **Fig. 1a**. Der HZBr weist ein vertikal in den Grundwasserleiter / grundwassererfülltes Gebirge geführtes Schachtbauwerk 31 und horizontale Filterrohre 6 auf. Der HZBr wurde mittels Schneidschuh 34 auf die gewünschte Teufe im grundwassererfüllten Gebirge abgeteuft und zum Liegenden mit einer Betonplombe aus Unterwasserbeton 33 und druckwasserdichten Ausgleichssohle aus Stahlbeton 32 verschlossen. Nach dem Lenzen des abgeteuften Schachtes 31 ist dieser trocken, daher die Bezeichnung "Trockenaufgestellter HZBr". Das Schachtbauwerk 31 kann Innendurchmesser von 2m und größer aufweisen und als Rechteckschachtbauwerk (Senkschacht/Fertigteilschacht, monolithischer Schacht, Überschnittbohrschacht etc.) oder Rundschachtbauwerk ausgeführt sein. Der Innendurchmesser wird bei allen Schächten bestimmt durch die Anzahl der Filterstränge, Pumpen, Rohrleitungen, späteren Vortrieb von Reservesträngen und dem Arbeitsschutz, sowie natürlich prioritär von Grundwasserleitermächtigkeit, den geohydraulischen Parametern und dem zu erzielenden Wärme- und Kältebedarf. Der Filterstrang 6 ist unterhalb der Grundwasserlinie / Grundwasseroberfläche horizontal in den Porengrundwasserleiter verlegt. Der Filterstrang mit dem Filterrohr 6 wird in einem oder mehreren geologischen, grundwassererfüllten Horizonten derart positioniert, dass das zu fördernde Fluid (z.B. Grundwasser) diese unterirdischen Wege mit geringerem geohydraulischen/hydraulischen Widerstand nutzt und gezielt über die horizontalen Filterstränge 6 und Vollrohrstrecke des Stranges 5 in den Horizontalfilterbrunnen geführt wird. Die Vollrohrstrecke des Filterstranges 5 wird in ihrer Länge derart bemessen, dass eine möglichst geringe Grundwasserabsenkung bzw. -aufböschung am Schacht induziert wird. Dies führt zu einer insgesamt flacheren Beeinflussung des Grundwasserspiegels, was einen Vorteil des Horizontalfilterbrunnens im Vergleich zu Vertikalfilterbrunnen begründet. Die Filterstränge können nach verschiedenster Art und Ausführung (horizontal, schräg, geschlitzt, gelocht, gewickelt etc. in verschiedenen Materialien Ton, PVC, HDPE, Stahl, Kupfer, Edelstahl, Holz etc.) beschaffen sein. Sie werden beispielsweise mit bekannten Verfahren (Mikrotunneling, horizontaler Rohrvortrieb z.B. gemäß DE 196 25 073.0 "Verfahren und Vorrichtung zum Einbringen von Dränage- und Sickerwasserleitungen in geschlossener Bauweise", RANNY-Verfahren, Fehlmann-Verfahren, PREUSSAG-Verfahren, mittels Überschnittbohrung und Kiesgasse (EP 19 61 871 A1 "Herstellungsverfahren eines Horizontalfilterbrunnen und Brunnen an sich"), offene Verlegung in Gräben etc.) vorgetrieben, eingespült, geschlitzt bzw. verlegt. Die Filterstränge 6 können schräg oder horizontal auch deshalb beliebig oft und in der unteren Ebene des Grundwasserleiters angeordnet werden, um somit auf mögliche Anisotropien, geohydraulische Durchlässigkeiten, etc. optimal angepasst zu werden. Die horizontalen Filterohre 6 werden durch die Schachtwanddurchführung 2 in die Schieberkammer 1 geführt. Außerdem wird damit die Anordnung in mehreren Grundwasserstockwerken getrennt (bei vorhandenen oder nicht vorhandenen Trennstauern oder Geringleitern) möglich, insofern dies fachlich und somit wasserrechtlich möglich ist. Aus dem Lockergestein/Porengrundwasserleiter zugeführtes Grundwasser wird über den in den Innenbereich des Schachtbauwerks 31 geführten Filterstrang 6, der Schieberkammer 1 mit dem an die Schieberkammer 1 angeschweißtem Stutzen (Stranganschlußleitung) 7, der Ringleitung 13 zugeführt. Die Schieberkammer 1 ist auf der Schachtinnenseite mit einem Schieber 3 und X-Stück mit Plexiglasscheibe 4 verschlossen und kann somit für nichtinvasive Kontrolle der Filterstranginnenseite 5 und 6 genutzt werden (Patent DE 100 31 593). An und in der Stranganschlußleitung 7 befinden sich Messapparaturen, der Magnetisch-Induktive-Durchflussmesser (MID) 11, Temperatursonde 9 und Druckmesser 8, sowie ein Pass- und Ausbaustück 10. Durch die Schieberkammer 1 wird ebenfalls die Säurespülleitung 12 oder Piezometerleitung mit 2- oder 3-Wegeventilen angeordnet. Über sie können Regeneriermaßnahmen im Ringbereich des horizontalen Filterrohres unterstützt werden, z.B. durch chem. Säuerung. Als Piezometerleitung dienen sie der Druckpotentialmessung im Filterkies und somit zur präventiven Feststellung der Brunnenalterung.

Die Ringleitung 13 wurde in DE 100 31 593 A1 ausführlich beschrieben. Sie ist in Segmente mit elektrisch-gesteuerten Schiebern 14 passgenau (Pass- und Ausbaustück 15) unterteilt. Die Anzahl der Segmente in der Ringleitung 13 wird durch die Anzahl der Filterstränge 6 und dem Platz innerhalb des Schachtes 31 und dem Bedarf der segmentierten Erfassung des Grundwassers im Umkreis der Brunnenanlage bestimmt.

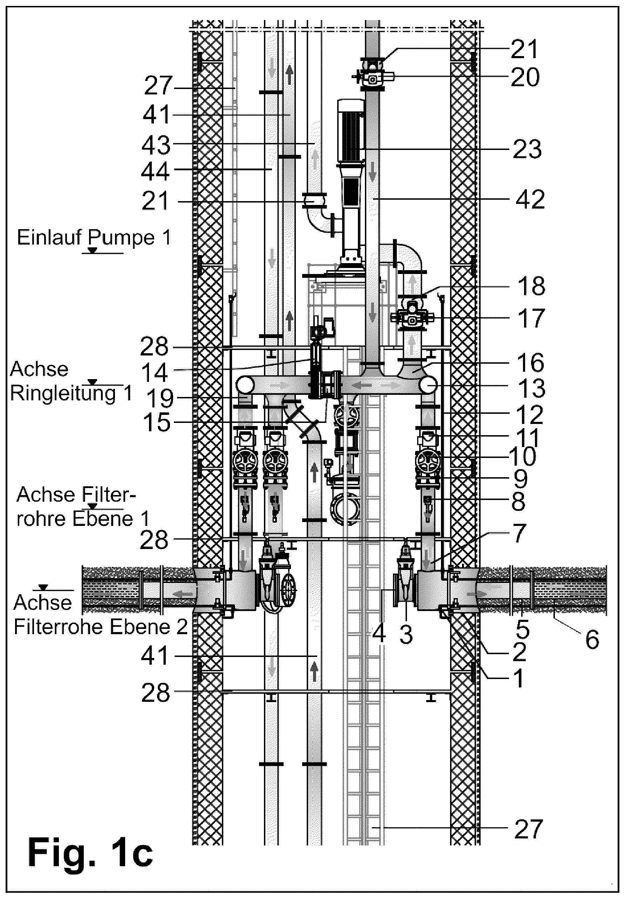

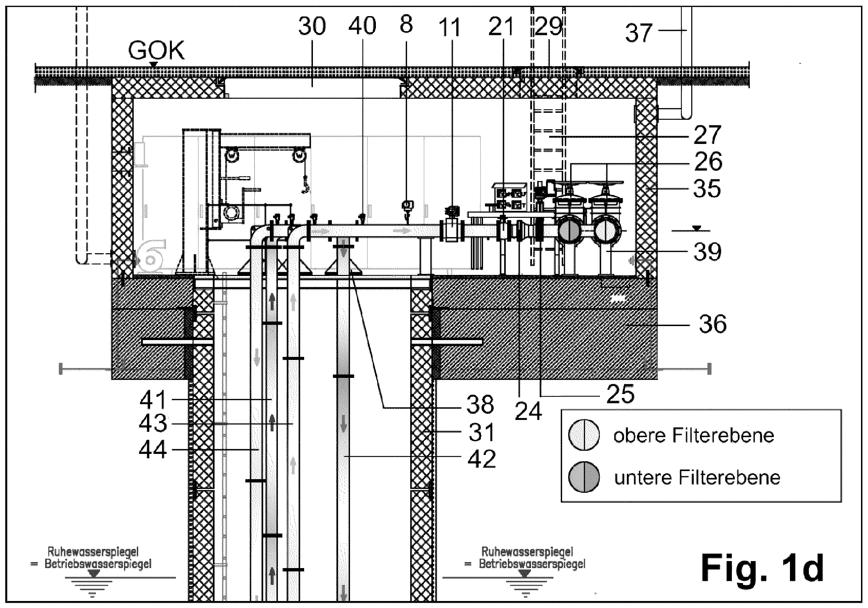

Über die Ringleitung 13 und die Sattelstutzen 16 fließt das Grundwasser aus der unteren Ebene durch den elektrisch-gesteuerten Schieber 17, dem Gummi-Kompensator 18 der Kaltwasser-Pumpe 22 auf Wandkonsole 22 zu. Das Grundwasser für Kühlungszwecke wird über die Kaltwasser-Druckwasserleitung 41 mit Gummikompensator 21 zur Wärmequelle/Kältemaschine (Wärmetauschanordnung) geleitet. (siehe **Fig. 1c** und **Fig. 1d**).

**Fig. 1c** zeigt eine Detailansicht eines mittleren Bereichs des HZBr in Trockenaufstellung gemäß **Fig. 1a****.** Hier wird die Fortführung der Druckleitung 41 von der unteren Ebene, von den Kaltwasser-Pumpen, zur Brunnenstube in **Fig. 1d** konstruktiv dargestellt.

**Fig. 1d** zeigt eine Detailansicht eines oberen Bereichs des HZBr in Trockenaufstellung gemäß **Fig. 1a****.** Hier sind den oberen Teil des Senkschachtes 31 und die Brunnenstube 35. Alle vertikalen Druckleitungen ("Kaltwasser-Druckleitung" untere Grundwasserebene 41, "Kaltwasser-Druckleitung" obere Grundwasserebene 42, "Warmwasser-Druckleitung" obere Grundwasserebene 43, "Warmwasser-Druckleitung" untere Grundwasserebene 44) werden über Abfangteller (Pumpenstuhl) 38 gehalten und über horizontalen Druckleitungen mit Messapparaturen, dem Magnetisch-Induktiven-Durchflussmesser (MID) 11, Temperatursonde 40 und Druckmesser 8, sowie einem Rückflussverhinderer 24 und elektrisch-getriebene Plattenschieber 25 zur Sammelleitung mit Handschiebern 26 der Wärmequelle/Kältemaschine (Wärmetauschanordnung) (brunnenextern, deshalb hier nicht abgebildet) geführt.

Durch die Abfuhr der Wärme zu Kühlzwecken aus dem Grundwasser der unteren Grundwasserebene wird das Grundwasser in der Regel um ca. 3-6 Kelvin (andere Temperaturspreizungen sind möglich) erwärmt wieder in die Brunnenstube über die "Kaltwasser-Druckrohrleitung" 42 dem Grundwasserleiter, obere Grundwasserebene, zurückgeführt. Dazu wird in **Fig. 1d** der Plattenschieber 25 der "Kaltwasser-Druckleitung" untere Grundwasserebene 41 geschlossen und der Plattenschieber 25 der "Kaltwasser-Druckleitung" obere Grundwasserebene 42 automatisch mittels elektrisch-getriebene Plattenschieber (wahlweise auch per Hand möglich) geöffnet.

Ebenso wird in **Fig. 1c** der Absperrschieber 17 geschlossen. Damit wird ein Eindrücken von Grundwasser, welches von der Wärmequelle kommt in die Druckleitung 43 verhindert. Das von der Wärmepumpe/Kältemaschine (Wärmetauschanordnung) kommende Grundwasser wird somit über die obere Ringleitung 13, den Stranganschlussleitungen 7 der oberen Filterebene 6 in den Grundwasserleiter obere Ebene infiltriert. Die in den Stranganschlussleitungen 7 befindlichen Messgeräte MID 11, Temperatursonde 9 und Drucksonde 8 sind zur Kontrolle von Infiltrationsmengen, Temperatur und Drücke zu nutzen.

Bei Nutzung des HZBr in Trockenaufstellung auf **Fig. 1a** zur Wärmenutzung aus Grundwasser wird die eben beschriebene Betriebsweise umgekehrt. Aus den oberen Filtersträngen 6 der oberen Grundwasserebene gem. **Fig. 1c** gelangt das Grundwasser durch die Vollrohrstrecke 5, durch die Schachtwanddurchführung 2, die Schieberkammer 1, den Stranganschlußleitungen (Stutzen) 7, über Magnetisch-Induktivem Durchflussmesser (MID) 11, vorbei an Druck- und Temperatursonden (8, 9) zur Ringleitung 13. Der elektrisch-gesteuerte Schieber 17 ist nunmehr geöffnet und der elektrisch-gesteuerte Schieber 20 (**Fig. 1b**) geschlossenen. Somit gelangt das Grundwasser der oberen Ebene über den Sattelstutzen 16 der Ringleitung 13 zum Gummikompensator 18 und zur Warmwasser-Pumpe 23. Das Grundwasser der oberen Ebene wird über die "Warmwasser-Druckleitung" 43, in **Fig. 1d** in die Brunnenstube 35, weiter an Druck- und Temperatursonde (8, 40) vorbei, durch MID 11, Gummikompensator 21, Rückflussverhinderer 24, elektrisch-gesteuertem Schieber 25 zur Wärmepumpe (hier außerhalb Brunnenstube, deshalb nicht dargestellt) gefördert. Das genutzte Grundwasser wird abgekühlt über die "Warmwasser-Druckleitung" 44 untere Grundwasserebene in die untere horizontale Filterebene 6 geführt.

Die dafür erforderlichen Schieberstellungen sind adäquat vorzunehmen. Die Leitungen 41 und 42 sind mit den Schiebern 25 in der Brunnenstube 35 (**Fig. 1d**), oberhalb der oberen Ringleitung 13 mit Schieber 20 und oberhalb der unteren Ringleitung 13 mit Schieber 17 zu verschließen. Der Schieber 20 oberhalb der unteren Ringleitung 13 wird geöffnet. Somit kann das abgekühlte Grundwasser nach der Wärmepumpe über die Druckleitung 44, den Gummikompensator 21, dem Sattelstutzen und der unteren Ringleitung 13 in die unteren Filterstränge 6 dem Grundwasser der unteren Ebene zugeführt werden. Die in den Stranganschlussleitungen 7 der unteren Filterebene befindlichen Messgeräte MID 11, Temperatursonde 9 und Drucksonde 8 sind analog zur oberen Filterebene zur Kontrolle von Fördermengen, Grundwassertemperatur und Drücke zu nutzen.

Im Ergebnis wird also eine Zirkulationsleitung gebildet, mit der gehobenes Grundwasser nach einer Verwertung wieder in den Grundwasserleiter reinfiltriert wird. Die Verwertung findet dabei über die an der Zirkulationsleitung eingebundene Wärmetauschanordnung statt.

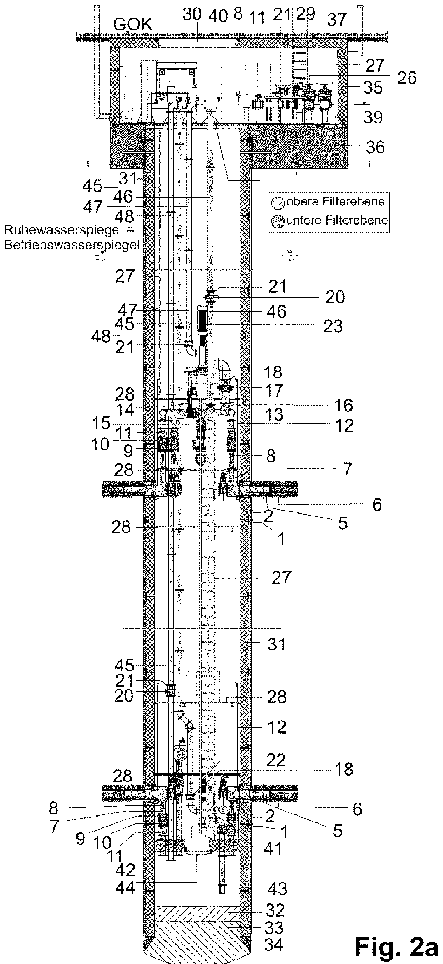

**Fig. 2a** zeigt eine Gesamtansicht eines erfindungsgemäßen Horizontalfilter-Zirkulationsbrunnens (HZBr) in Trockenaufstellung mit einer Druckkammer und einer Ringleitung und Kreiselpumpen.

Die Anwendung dieser Ausführungsart der Erfindung wird vorrangig da erfolgen, wo die Grundwasserleitermächtigkeit zwar groß genug ist für die prinzipielle Anwendung des HZBr für geothermische Nutzung, jedoch als nicht ausreichend genug um zweimal die patentierte Ringleitung gem. Patent DE 100 31 593 A1 übereinander anzuordnen. Die Druckkammer 44 kann beispielsweise auch unterhalb der unteren Ebene des Grundwasserleiters positioniert werden.

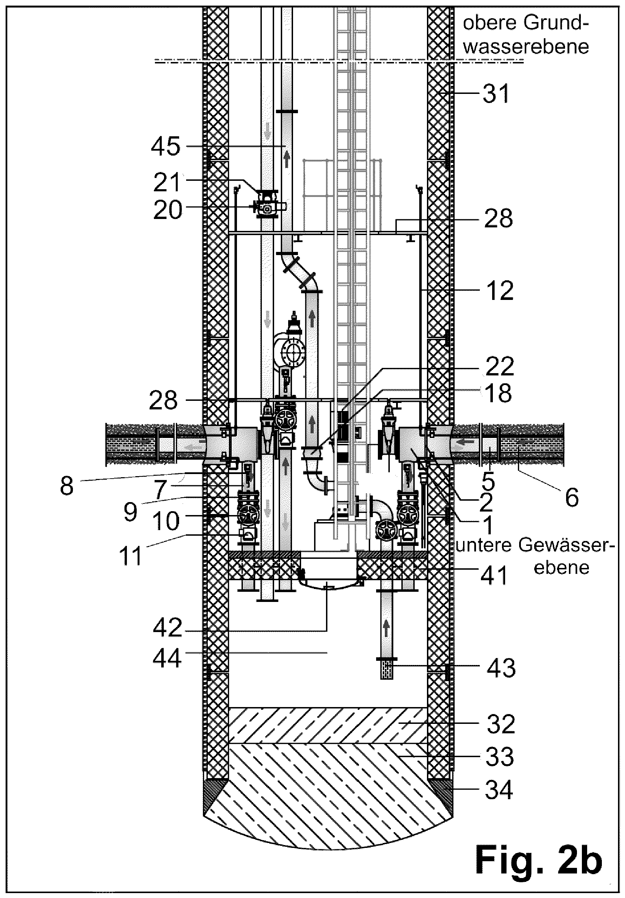

**Fig. 2b** zeigt eine Detailansicht eines unteren Bereichs des HZBr in Trockenaufstellung gemäß **Fig. 2a****.** Der HZBr weist ein vertikal in den Grundwasserleiter / grundwassererfülltes Gebirge geführtes Schachtbauwerk 31 und horizontale Filterrohre 6 auf. Hier in der Ausführungsart nach **Fig. 2b** wurde es mittels Schneidschuh 34 auf die gewünschte Teufe im grundwassererfüllten Gebirge abgeteuft und zum Liegenden mit einer Betonplombe aus Unterwasserbeton 33 und druckwasserdichten Ausgleichssohle aus Stahlbeton 32 verschlossen. Der Schneidschuh 34 kann konstruktiv in den untersten Betonring integriert werden. Dies ist nicht patentrelevant. Nach dem Lenzen des abgeteuften Schachtes 31 ist dieser trocken, alle Messinstrumente, die Pumpen und Armaturen sind nicht von Grundwasser eingeschlossen, frei zugänglich, daher die Bezeichnung "Trockenaufgestellter HZBr". Lediglich die Druckkammer 44 kann nur nach dem Abschiebern der Filterstränge 6 und einer Druckentlastung durch Anpumpen über Domloch 42 durch die Stahlbetonzwischendecke 41 begangen werden. Das Schachtbauwerk 31 kann auch bei dieser Ausführungsart Innendurchmesser von 2m und größer aufweisen und als Rechteckschachtbauwerk (Senkschacht/Fertigteilschacht, monolithischer Schacht, Überschnittbohrschacht etc.) oder Rundschachtbauwerk ausgeführt sein. Der Innendurchmesser wird bei allen Schächten bestimmt durch die Anzahl der Filterstränge, Pumpen, Rohrleitungen, späteren Vortrieb von Reservesträngen und dem Arbeitsschutz, sowie natürlich prioritär von Grundwasserleitermächtigkeit, den geohydraulischen Parametern und dem zu erzielenden Wärme- und Kältebedarf. Der Filterstrang 6 der unteren Grundwasserebene ist unterhalb der Grundwasserlinie / Grundwasseroberfläche horizontal in den grundwassererfüllten Porengrundwasserleiter verlegt. Der Filterstrang mit dem Filterrohr 6 wird in einem oder mehreren geologischen, grundwassererfüllten Horizonten derart positioniert, dass das zu fördernde Fluid (z.B. Grundwasser) diese unterirdischen Wege mit geringerem geohydraulischen/hydraulischen Widerstand nutzt und gezielt über die horizontalen Filterstränge 6 und Vollrohrstrecke des Stranges 5 in den Horizontalfilterbrunnen geführt wird. Die Vollrohrstrecke des Filterstranges 5 wird in ihrer Länge derart bemessen, dass eine möglichst sehr geringe Grundwasserabsenkung am Schacht induziert wird. Dies führt zu einer insgesamt flacheren Grundwasserspiegelbeeinflussung, was einen Vorteil des Horizontalfilterbrunnens im Vergleich zu Vertikalfilterbrunnen begründet. Die Filterstränge können nach verschiedenster Art und Ausführung (horizontal, schräg, geschlitzt, gelocht, gewickelt etc. in verschiedenen Materialien Ton, PVC, HDPE, Stahl, Kupfer, Edelstahl, Holz etc.) beschaffen sein. Sie werden beispielsweise mit bekannten Verfahren (Mikrotunneling, horizontaler Rohrvortrieb z.B. gemäß DE 196 25 073.0 "Verfahren und Vorrichtung zum Einbringen von Dränage- und Sickerwasserleitungen in geschlossener Bauweise", RANNY-Verfahren, Fehlmann-Verfahren, PREUSSAG-Verfahren, mittels Überschnittbohrung und Kiesgasse (EP 19 61 871 A1 "Herstellungsverfahren eines Horizontalfilterbrunnen und Brunnen an sich"), offene Verlegung in Gräben etc.) vorgetrieben, eingespült, geschlitzt bzw. verlegt. Die Filterstränge 6 können schräg oder horizontal auch deshalb beliebig oft und in der unteren Ebene des Grundwasserleiters angeordnet werden, um somit auf mögliche vertikale Anisotropien (z.B. Fluidbeschaffenheit, geohydraulische Durchlässigkeiten, etc.) optimal angepasst zu werden. Die horizontalen Filterohre 6 werden durch die Schachtwanddurchführung 2 in die Schieberkammer 1 geführt. Außerdem wird damit die Anordnung in mehreren Grundwasserstockwerken getrennt (bei vorhandenen oder nicht vorhandenen Trennstauern oder Geringleitern) möglich, insofern dies fachlich und somit wasserrechtlich möglich ist. Aus dem Porengrundwasserleiter zugeführtes Grundwasser für Kältezwecke wird über das in den Innenbereich des Schachtbauwerks 31 geführte Filterstrangende 5, der Schieberkammer 1 mit dem an die Schieberkammer 1 nach unten angeschweißtem Stutzen (Stranganschlussleitung) 7, der Druckkammer 44 zugeführt. Die Schieberkammer 1 ist auf der Schachtinnenseite mit einem Schieber 3 und X-Stück mit Plexiglasscheibe 4 verschlossen und kann somit für nichtinvasive Kontrolle der Filterstranginnenseite 5 und 6 genutzt werden (Patent DE 100 31 593). An und in der Stranganschlussleitung 7 befinden sich Messapparaturen, der Magnetisch-Induktive-Durchflussmesser (MID) 11, Temperatursonde 9 und Druckmesser 8, sowie ein Pass- und Ausbaustück 10. Durch die Schieberkammer 1 wird ebenfalls die Säurespülleitung 12 oder Piezometerleitung mit 2- oder 3-Wegeventilen angeordnet. Über sie können Regeneriermaßnahmen im Ringbereich des horizontalen Filterrohres unterstützt werden durch chem. Säuerung. Als Piezometerleitung dienen sie der Druckpotentialmessung im Filterkies und somit zur präventiven Feststellung der Brunnenalterung.

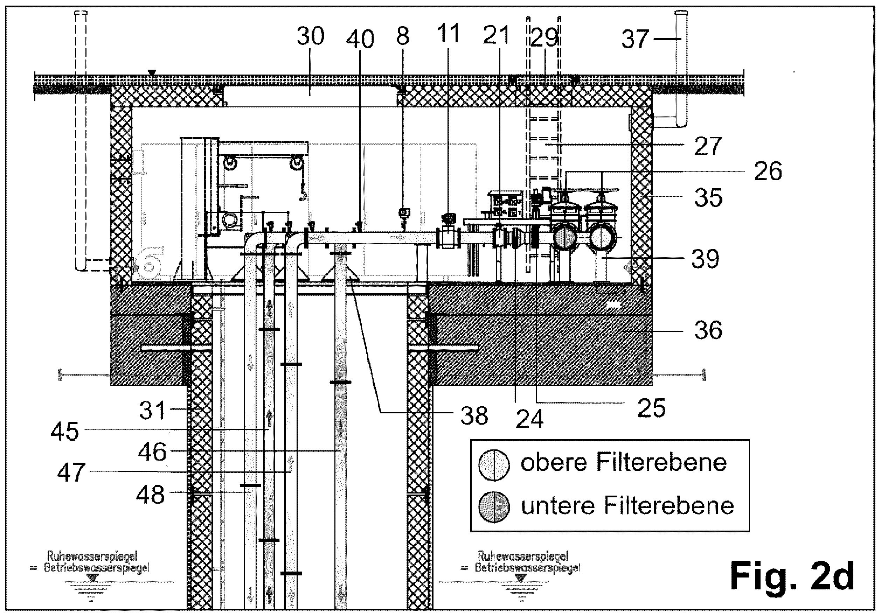

Die einzelnen Filterstranganschlussleitungen 7 sind druckwasserdicht in die Druckkammer geführt. Der Zufluss eines Filterstranges kann über die elektrisch-gesteuerten Schieber erlaubt oder unterbunden werde. Insofern fungiert die Druckkammer 44 analog einer Ringleitung. Aus der Druckkammer 44, über Saugkorb 43 und den elektrisch-gesteuerten Schiebern 17 fließt das Grundwasser aus der unteren Ebene der Kaltwasser-Pumpe 22 auf Stahlbetonzwischendecke 41 zu. Das Grundwasser für Kühlungszwecke wird über die Kaltwasser-Druckwasserleitung 45 mit Gummikompensator 18 zur Klimaanlage geleitet. (siehe **Fig**. **2c** und **Fig. 2d**).

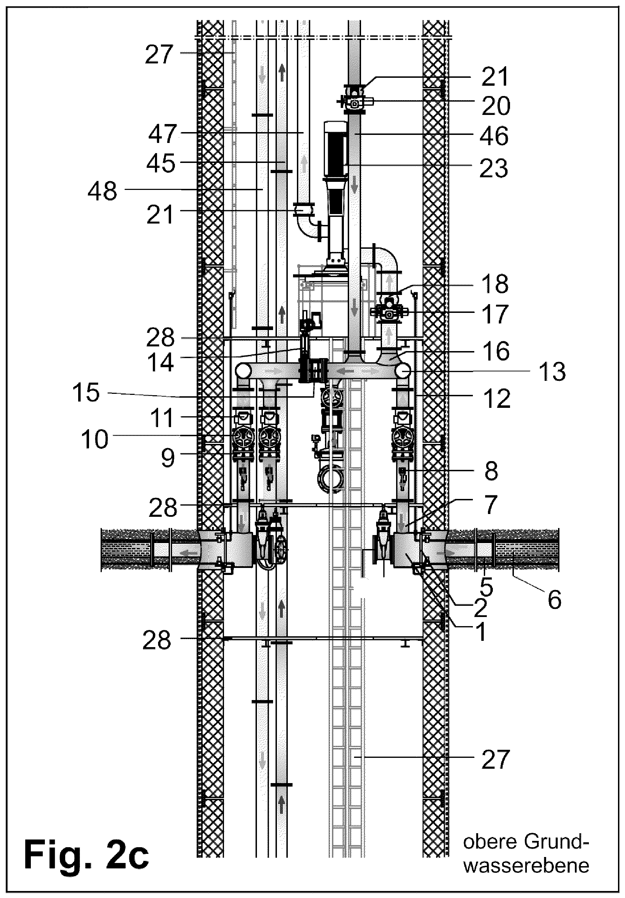

In **Fig. 2c** wird die Fortführung der Kaltwasser-Druckwasserleitung 45 von der unteren Grundwasser-Ebene, von den Kaltwasser-Pumpen 22, zur Brunnenstube 35 in **Fig. 2d** konstruktiv dargestellt.

**Fig. 2d** zeigt den oberen Teil des Senkschachtes 31 und die Brunnenstube 35. Alle vertikalen Druckleitungen ("Kaltwasser-Druckleitung" untere Grundwasserebene 45, "Kaltwasser-Druckleitung" obere Grundwasserebene 46, "Warmwasser-Druckleitung" obere Grundwasserebene 47, "Warmwasser-Druckleitung" untere Grundwasserebene 48) werden über Abfangteller (Pumpenstuhl) 38 gehalten und über horizontalen Druckleitungen mit Messapparaturen, der Magnetisch-Induktive-Durchflussmesser (MID) 11, Temperatursonde 40 und Druckmesser 8, sowie einem Rückflussverhinderer 24 und elektrisch-getriebene Plattenschieber 25 zur Sammelleitung mit Handschiebern 26 der Kältemaschine (Wärmetauschanordnung) (brunnenexterne, deshalb hier nicht abgebildet) geführt.

Nach dem Entzug der Kälte aus dem Grundwasser der unteren Grundwasserebene wird das Grundwasser um ca. 3-6 Kelvin (andere Temperaturspreizungen möglich) wieder in die Brunnenstube über die "Kaltwasser-Druckrohrleitung" 46 dem Grundwasserleiter, obere Grundwasserebene, zurückgeführt. Dazu wird in **Fig. 2d** der Plattenschieber 25 der "Kaltwasser-Druckleitung" untere Grundwasserebene 45 geschlossen und der Plattenschieber 25 der "Kaltwasser-Druckleitung" obere Grundwasserebene 46 automatisch mittels E-Antrieb (wahlweise auch per Hand möglich) geöffnet.

Ebenso wird in **Fig. 2c** der Absperrschieber 17 geschlossen. Damit wird ein Eindrücken von Grundwasser, welches von der Kältemaschine (Wärmetauschanordnung) kommt in die Druckleitung 47 verhindert. Das von der Kältemaschine (Wärmetauschanordnung) kommende Grundwasser wird somit über die obere Ringleitung 13, den Stranganschlussleitungen 7 der oberen Filterebene 6 in den Grundwasserleiter obere Ebene infiltriert. Die in den Stranganschlussleitungen 7 befindlichen Messgeräte MID 11, Temperatursonde 9 und Drucksonde 8 sind zur Kontrolle von Infiltrationsmengen, Temperatur und Drücke zu nutzen.

Bei Nutzung des HZBr in Trockenaufstellung mittels Druckkammer und Ringleitung wie auf **Fig. 2a** dargestellt zur Wärmenutzung aus Grundwasser wird die eben beschriebene Betriebsweise umgekehrt. Aus den oberen Filtersträngen 6 der oberen Grundwasserebene gem. **Fig. 2c** gelangt das Grundwasser durch die Vollrohrstrecke 5, durch die Schachtwanddurchführung 2, die Schieberkammer 1, den Stranganschlussleitungen (Stutzen) 7, über Magnetisch-Induktivem Durchflussmesser (MID) 11, vorbei an Druck- und Temperatursonden (8, 9) zur Ringleitung 13. Der elektrisch-gesteuerte Schieber 17 ist nunmehr geöffnet und der elektrisch-gesteuerte Schieber 20 geschlossenen. Somit gelangt das Grundwasser der oberen Ebene über den Sattelstutzen 16 der Ringleitung 13, über den geöffneten Schieber 17 zum Gummikompensator 18 und zur Warmwasser-Pumpe 23. Das Grundwasser der oberen Ebene wird über die "Warmwasser-Druckleitung" 47, in **Fig. 2c** in die Brunnenstube 35, weiter an Druck- Temperatursonde (8, 40) vorbei, durch MID 11, Gummikompensator 21, Rückflussverhinderer 24, elektrisch-gesteuertem Schieber 25 zur Wärmepumpe (hier außerhalb Brunnenstube, deshalb nicht dargestellt) gefördert. Das genutzte Grundwasser wird abgekühlt über die "Warmwasser-Druckleitung" 48 über die Druckkammer 44 (Fig. 2b) in die untere Grundwasserebene über die untere horizontale Filterebene 6 geführt.

Die dafür erforderlichen Schieberstellungen sind adäquat vorzunehmen. Die Leitungen 45 und 46 sind mit den Schiebern 25 in der Brunnenstube 35 (**Fig. 2d**), oberhalb der oberen Ringleitung 13 mit Schieber 20 zu verschließen. Der Schieber 20 oberhalb der Druckkammer 44 wird geöffnet. Somit kann das abgekühlte Grundwasser nach der Wärmepumpe über die Druckleitung 48, den Gummikompensator 21, durch den geöffneten Schieber 20 in die Druckkammer 44 und in die unteren Filterstränge 6 dem Grundwasser der unteren Ebene zugeführt werden. Die in den Stranganschlussleitungen 7 der unteren Filterebene befindlichen Messgeräte MID 11, Temperatursonde 9 und Drucksonde 8 sind analog zur oberen Filterebene zur Kontrolle von Fördermengen, Grundwassertemperatur und Drücke zu nutzen.

Im Ergebnis wird also eine Zirkulationsleitung gebildet, mit der gehobenes Grundwasser nach einer Verwertung wieder in den Grundwasserleiter reinfiltriert wird. Die Verwertung findet dabei über die an die Zirkulationsleitung eingebundene Wärmetauschanordnung statt.

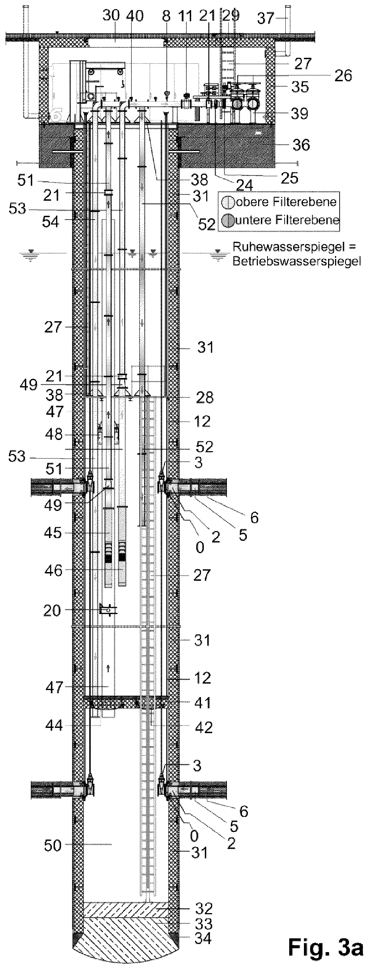

Fig. 3a zeigt eine Gesamtansicht eines erfindungsgemäßen Horizontalfilter-Zirkulationsbrunnens (HZBr) in Nassaufstellung mittels Unterwassermotorpumpen in freier Grundwasser-oberfläche innerhalb des Brunnenschachtes.

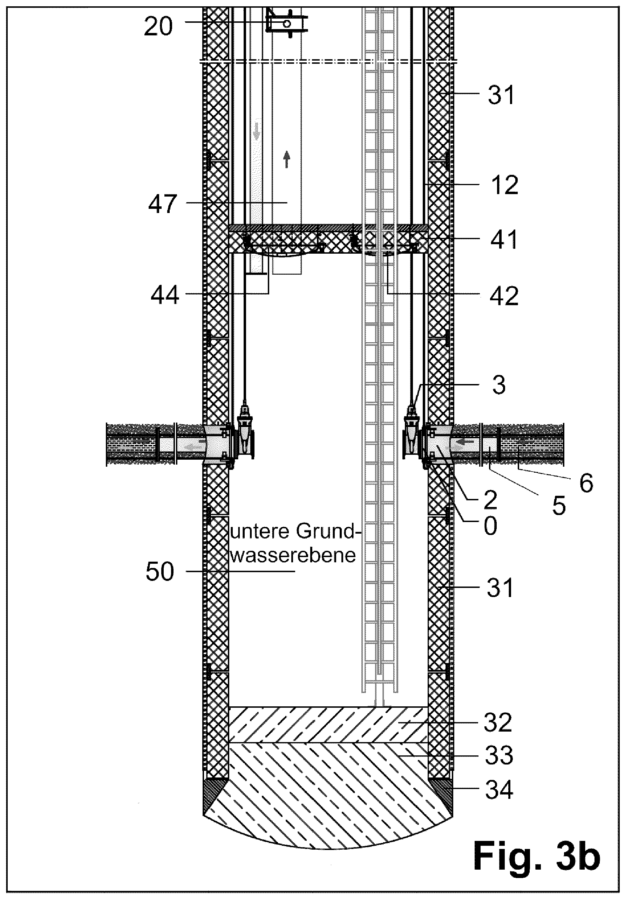

**Fig. 3b** zeigt eine Detailansicht eines unteren Bereichs des HZBr in Nassaufstellung gemäß **Fig. 3a****.** Der HZBr weist ein vertikal in den Grundwasserleiter / grundwassererfülltes Gebirge geführtes Schachtbauwerk 31 und horizontale Filterrohre 6 auf. Hier in der Ausführungsart nach **Fig. 3b** wurde es mittels Schneidschuh 34 auf die gewünschte Teufe im grundwassererfüllten Gebirge abgeteuft und zum Liegenden mit einer Betonplombe aus Unterwasserbeton 33 und druckwasserdichten Ausgleichssohle aus Stahlbeton 32 verschlossen. Nach dem Lenzen des abgeteuften Schachtes 31 ist dieser trocken. Danach werden die Filterstränge 6 in beiden Grundwasserebenen errichtet. Als Schieberkammer 0 wird nur ein FFR-Stück in kurzer Bauausführung an den Schachtwanddurchführungsring montiert und an diesem der Schieber 3 mit Spindelgestänge (wahlweise auch Klappe für Mengenregulierung). Nach Fertigstellung der horizontalen Filterstränge 6 in beiden Ebenen wird die Stahlbetonzwischendecke 41 mit Montageluke 44 und Revisionsluke 42 ausgestattet.

In der Stahlbetonzwischendecke 41 ist druckwasserdicht ein nach oben offenes Standrohr 47, hier exemplarisch aus Stahl ausgeführt, bei entsprechender Grundwasserqualität bzw. zur Verlängerung der Langlebigkeit kann dieses aus in Edelstahl vorgesehen werden. Das Schachtbauwerk 31 kann Innendurchmesser von 2m und größer aufweisen und als Rechteckschachtbauwerk (Senkschacht/Fertigteilschacht, monolithischer Schacht, Überschnittbohrschacht etc.) oder Rundschachtbauwerk ausgeführt sein. Der Innendurchmesser wird bei allen Schächten bestimmt durch die Anzahl der Filterstränge, Pumpen, Rohrleitungen, späteren Vortrieb von Reservesträngen und dem Arbeitsschutz, sowie natürlich prioritär von Grundwasserleitermächtigkeit, den geohydraulischen Parametern und dem zu erzielenden Wärme- und Kältebedarf. Die Filterstränge 6 beider Grundwasserebenen sind unterhalb der Grundwasserlinie / Grundwasseroberfläche horizontal in den grundwassererfüllten Porengrundwasserleiter verlegt. Der Filterstrang mit dem Filterrohr 6 wird in einem oder mehreren geologischen, grundwassererfüllten Horizonten derart positioniert, dass das zu fördernde Fluid (z.B. Grundwasser) diese unterirdischen Wege mit geringerem geohydraulischen/hydraulischen Widerstand nutzt und gezielt über die horizontalen Filterstränge 6 und Vollrohrstrecke des Stranges 5 in den Horizontalfilterbrunnen geführt wird. Die Vollrohrstrecke des Filterstranges 5 wird in ihrer Länge derart bemessen, dass eine möglichst geringe Grundwasserabsenkung oder -aufböschung am Schacht induziert wird. Dies führt zu einer insgesamt flacheren Grundwasserspiegelbeeinflussung, was einen Vorteil des Horizontalfilterbrunnens im Vergleich zu Vertikalfilterbrunnen begründet. Die Filterstränge können nach verschiedenster Art und Ausführung (horizontal, schräg, geschlitzt, gelocht, gewickelt etc. in verschiedenen Materialien Ton, PVC, HDPE, Stahl, Kupfer, Edelstahl, Holz etc.) beschaffen sein. Sie werden beispielsweise mit bekannten Verfahren (Mikrotunneling, horizontaler Rohrvortrieb z.B. gemäß DE 196 25 073.0 "Verfahren und Vorrichtung zum Einbringen von Dränage- und Sickerwasserleitungen in geschlossener Bauweise", RANNY-Verfahren, Fehlmann-Verfahren, PREUSSAG-Verfahren, mittels Überschnittbohrung und Kiesgasse (EP 19 61 871 A1 "Herstellungsverfahren eines Horizontalfilterbrunnen und Brunnen an sich"), offene Verlegung in Gräben etc.) vorgetrieben, eingespült, geschlitzt bzw. verlegt. Die Flächenverfügbarkeit, Verlegungstiefe, vorhandene unterirdische Wirtschaft, der Wasserdruck und die Wirtschaftlichkeit bestimmen letztendlich das anzuwendende Verfahren der Filterstrangherstellung. Die Filterstränge 6 können schräg oder horizontal auch deshalb beliebig oft und in der unteren Ebene des Grundwasserleiters angeordnet werden, um somit auf mögliche vertikale Anisotropien (z.B. Fluidbeschaffenheit, geohydraulische Durchlässigkeiten, etc.) optimal angepasst zu werden. Die horizontalen Filterohre 6 werden durch die Schachtwanddurchführung 2 in die Schieberkammer 0 geführt. Außerdem wird damit die Anordnung in mehreren Grundwasserstockwerken getrennt (bei vorhandenen oder nicht vorhandenen Trennstauern oder Geringleitern) möglich, insofern dies fachlich und somit wasserrechtlich möglich ist. Aus dem Porengrundwasserleiter zugeführtes Grundwasser für Kältezwecke wird über das in den Innenbereich des Schachtbauwerks 31 geführte Filterstrangende 5, der Schieberkammer 0 und dem geöffneten Schieber 3 zugeführt. Der Grundwasserstand spiegelt sich bei geöffneten Schiebern 3 der unteren Ebene im Standrohr 47 aus. Durch die Schieberkammer 0 kann ebenfalls die Säurespülleitung 12 oder Piezometerleitung mit 2- oder 3-Wegeventilen angeordnet werden. Über sie können Regeneriermaßnahmen im Ringbereich des horizontalen Filterrohres unterstützt werden durch chem. Säuerung. Als Piezometerleitung dienen sie der Druckpotentialmessung im Filterkies und somit zur präventiven Feststellung der Brunnenalterung.

Die untere drucklose Kammer 50 (Fluidkammer unterer Filterbereich) beherbergt alle Filterstränge 6 der unteren Grundwasserebene. Bei Montage von Klappe mit Spindelantrieb anstelle der Schieber 3 mit Spindelantrieb können die Zuflussmengen der einzelnen Filterstränge gedrosselt werden, um somit den Bedarf der segmentierten Erfassung des Grundwassers im Umkreis der Brunnenanlage zu entsprechen.

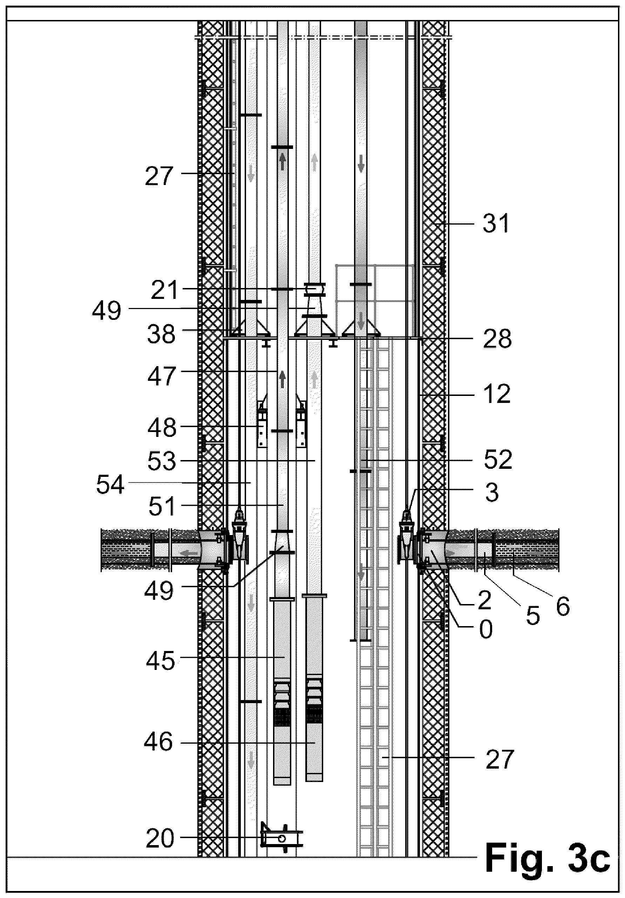

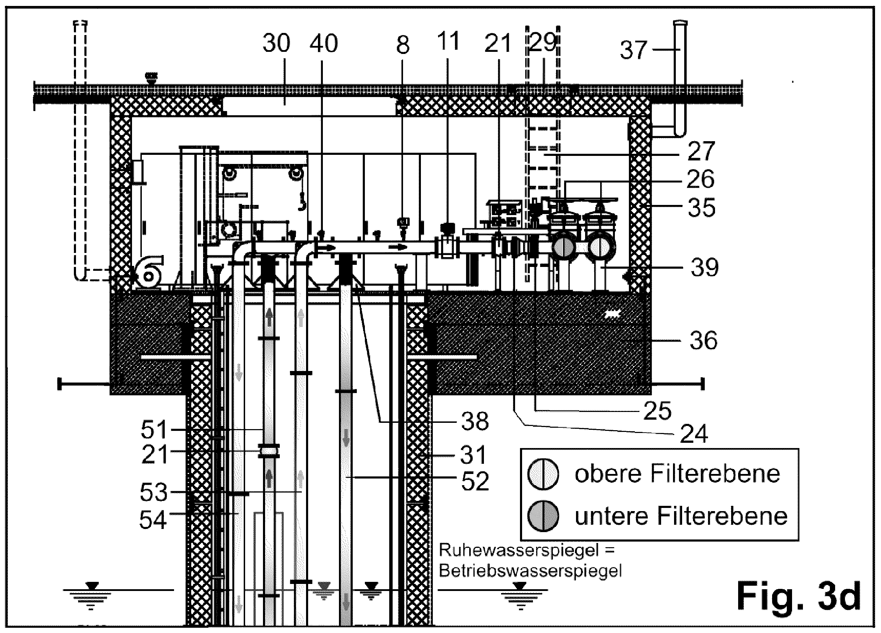

Gem. **Fig. 3c** befindet sich im Standrohr 47, welches über geeignete Tragkonstruktionen 48 fixiert wird, das Grundwasser aus der unteren Ebene und die 1. Unterwassermotorpumpe 45, sowie eine unterhalb dieser Pumpe befindliche Klappe 20 mit Bediengestänge. Das Grundwasser für Kühlungszwecke wird über die Kaltwasser-Druckwasserleitung 51 mit Gummikompensator 21 zur Klimaanlage geleitet. (siehe **Fig. 3d**).

**Fig. 3d** zeigt den oberen Teil des Senkschachtes 31 und die Brunnenstube 35. Alle vertikalen Druckleitungen ("Kaltwasser-Druckleitung" untere Grundwasserebene 51, "Kaltwasser-Druckleitung" obere Grundwasserebene 52, "Warmwasser-Druckleitung" obere Grundwasserebene 53, "Warmwasser-Druckleitung" untere Grundwasserebene 54) werden über Abfangteller (Pumpenstuhl) 38 gehalten und über horizontalen Druckleitungen mit Messapparaturen, der Magnetisch-Induktive-Durchflussmesser (MID) 11, Temperatursonde 40 und Druckmesser 8, sowie einem Rückflussverhinderer 24 und elektrisch-getriebene Plattenschieber 25 zur Sammelleitung mit Handschiebern 26 der Kältemaschine (Wärmetauschanordnung) (brunnenexterne, deshalb hier nicht abgebildet) geführt.

Nach dem Entzug der Kälte aus dem Grundwasser der unteren Grundwasserebene wird das um bis ca. 3-6 Kelvin erwärmte Grundwasser (andere Temperaturspreizungen sind möglich) wieder in der Brunnenstube über die "Kaltwasser-Druckrohrleitung" 52 dem Grundwasserleiter, obere Grundwasserebene, zurückgeführt. Dazu wird in **Fig. 3d** der Plattenschieber 25 der "Warmwasser-Druckleitung" 53 und 54 geschlossen und der Plattenschieber 25 der "Kaltwasser-Druckleitung" obere Grundwasserebene 52 automatisch mittels E-Antrieb (wahlweise auch per Hand möglich) geöffnet.

Das von der Kältemaschine (Wärmetauschanordnung) kommende Grundwasser wird somit über die obere Filterebene 6 in den Grundwasserleiter obere Ebene infiltriert. Die Kontrolle von Infiltrationsmengen, Temperatur und Drücke wird in der Brunnenstube befindlichen Messgeräte MID 11, Temperatursonde 9 und Drucksonde 8 vorgenommen.

Bei Nutzung des HZBr in Nassaufstellung gemäß **Fig. 3a** zur Wärmenutzung aus Grundwasser wird die eben beschriebene Betriebsweise umgekehrt. Aus den oberen Filtersträngen 6 der oberen Grundwasserebene gem. **Fig. 3c** gelangt das Grundwasser durch die Vollrohrstrecke 5, durch die Schachtwanddurchführung 2, die Schieberkammer 0 und dem Schieber 3 (wahlweise aus Klappe) mit Spindelgestänge direkt in den Brunnenschacht 31. Somit gelangt das Grundwasser der oberen Ebene direkt zur 2. Unterwassermotorpumpe 46. Das Grundwasser der oberen Ebene wird über die "Warmwasser-Druckleitung" 53, in **Fig. 3d** in die Brunnenstube 35, weiter an Druck- Temperatursonde (8, 40) vorbei, durch MID 11, Gummikompensator 21, Rückflussverhinderer 24, elektrisch-gesteuertem Schieber 25 zur Wärmepumpe (hier außerhalb Brunnenstube, deshalb nicht dargestellt) gefördert. Das genutzte Grundwasser wird abgekühlt über die "Warmwasser-Druckleitung" 54 zur untere Grundwasserebene in die untere horizontale Filterebene 6 geführt.

Die dafür erforderlichen Schieberstellungen sind adäquat vorzunehmen. Die Leitungen 51 und 52 sind mit den Schiebern/Klappen in der Brunnenstube 35 (**Fig. 3d**), zu verschließen. Die Klappe 20 im Standrohr 47 unterhalb der 1. Unterwassermotorpumpe wird geschlossen, sodass das zu reinfiltrierende Grundwasser sich in der unteren Ebene des Grundwasserleiters ausbreitet. Somit kann das abgekühlte Grundwasser nach der Wärmepumpe über die Druckleitung 54 in die unteren Filterstränge dem Grundwasser der unteren Ebene zugeführt werden.

Im Ergebnis wird also eine Zirkulationsleitung gebildet, mit der gehobenes Grundwasser nach einer Verwertung wieder in den Grundwasserleiter reinfiltriert wird. Die Verwertung findet dabei über die an der Zirkulationsleitung eingebundene Wärmetauschanordnung statt.

Zwischen den beiden Ausführungsarten - Trockenaufstellung und Nassaufstellung gibt es ebenso erfindungsgemäß Kombinationen. Für diese konstruktive erfindungsgemäße Form der HZBr wurde exemplarisch die untere Ebene als drucklose Kammer mit Unterwassermotorpumpen und die Ringleitung mit Kreispumpen in der oberen Ebene des Grundwasserleiters ausgeführt.

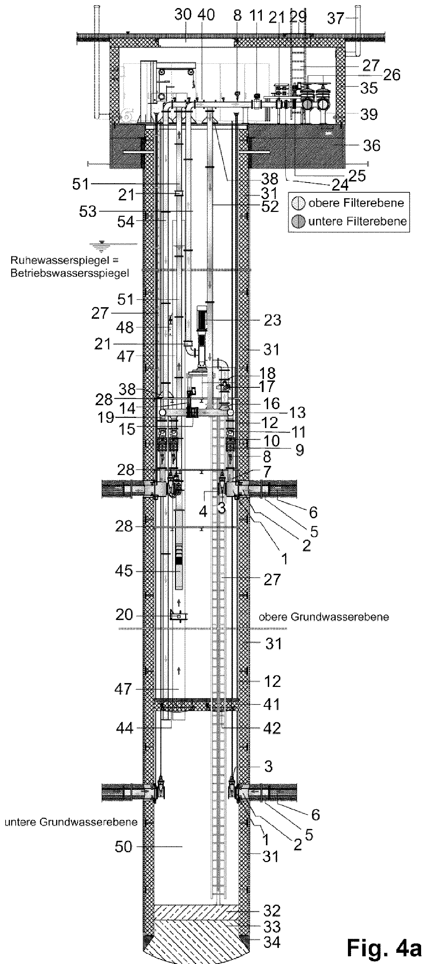

**Fig. 4a** zeigt eine Gesamtansicht eines erfindungsgemäßen Horizontalfilter-Zirkulationsbrunnen (HZBr) in Kombination einer Trocken- und Nassaufstellung mittels Ringleitung, Kreisel- und Unterwassermotorpumpen in freier Grundwasser-oberfläche innerhalb des Brunnenschachtes.

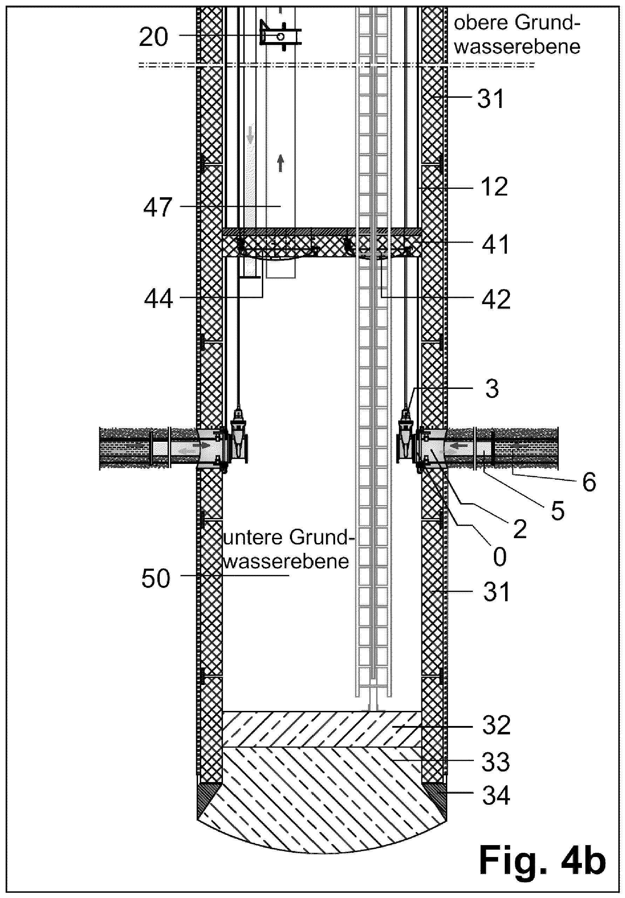

**Fig. 4b** zeigt eine Detailansicht eines unteren Bereichs des HZBr gemäß Fig. 4a. Der HZBr weist ein vertikal in den Grundwasserleiter / grundwassererfülltes Gebirge geführtes Schachtbauwerk 31 und horizontale Filterrohre 6 auf. Hier in der Ausführungsart nach **Fig. 4b** wurde es mittels Schneidschuh 34 auf die gewünschte Teufe im grundwassererfüllten Gebirge abgeteuft und zum Liegenden mit einer Betonplombe aus Unterwasserbeton 33 und druckwasserdichten Ausgleichssohle aus Stahlbeton 32 verschlossen. Nach dem Lenzen des abgeteuften Schachtes 31 ist dieser trocken. Danach werden die Filterstränge 6 in beiden Grundwasserebenen errichtet. Als Schieberkammer 0 wird nur ein FFR-Stück in kurzer Bauausführung an den Schachtwanddurchführungsring montiert und an diesem der Schieber 3 mit Spindelgestänge (wahlweise auch Klappe für Mengenregulierung). Nach Fertigstellung der horizontalen Filterstränge 6 in beiden Ebenen wird die Stahlbetonzwischendecke 41 mit Montageluke 44 und Revisionsluke 42 ausgestattet. In der Stahlbetonzwischendecke 41 ist druckwasserdicht ein nach oben offenes Standrohr 47, hier exemplarisch aus Stahl ausgeführt, bei entsprechender Grundwasserqualität bzw. zur Verlängerung der Langlebigkeit kann dieses aus in Edelstahl vorgesehen werden. Das Schachtbauwerk 31 kann Innendurchmesser von 2m und größer aufweisen und als Rechteckschachtbauwerk (Senkschacht/Fertigteilschacht, monolithischer Schacht, Überschnittbohrschacht etc.) oder Rundschachtbauwerk ausgeführt sein. Der Innendurchmesser wird bei allen Schächten bestimmt durch die Anzahl der Filterstränge, Pumpen, Rohrleitungen, späteren Vortrieb von Reservesträngen und dem Arbeitsschutz, sowie natürlich prioritär von Grundwasserleitermächtigkeit, den geohydraulischen Parametern und dem zu erzielenden Wärme- und Kältebedarf. Die Filterstränge 6 beider Grundwasserebenen sind unterhalb der Grundwasserlinie / Grundwasseroberfläche horizontal in den Grundwasserleiter verlegt. Der Filterstrang mit dem Filterrohr 6 wird in einem oder mehreren geologischen, grundwassererfüllten Horizonten derart positioniert, dass das zu fördernde Fluid (z.B. Grundwasser) diese unterirdischen Wege mit geringerem geohydraulischen/hydraulischen Widerstand nutzt und gezielt über die horizontalen Filterstränge 6 und Vollrohrstrecke des Stranges 5 in den Horizontalfilterbrunnen geführt wird. Die Vollrohrstrecke des Filterstranges 5 wird in ihrer Länge derart bemessen, dass eine möglichst geringe Grundwasserabsenkung oder -aufböschung am Schacht induziert wird. Dies führt zu einer insgesamt flacheren Grundwasserspiegelbeeinflussung, was einen Vorteil des Horizontalfilterbrunnens im Vergleich zu Vertikalfilterbrunnen begründet. Die Filterstränge können nach verschiedenster Art und Ausführung (horizontal, schräg, geschlitzt, gelocht, gewickelt etc. in verschiedenen Materialien Ton, PVC, HDPE, Stahl, Kupfer, Edelstahl, Holz etc.) beschaffen sein. Sie werden beispielsweise mit bekannten Verfahren (Mikrotunneling, horizontaler Rohrvortrieb z.B. gemäß DE 196 25 073.0 "Verfahren und Vorrichtung zum Einbringen von Dränage- und Sickerwasserleitungen in geschlossener Bauweise", RANNY-Verfahren, Fehlmann-Verfahren, PREUSSAG-Verfahren, mittels Überschnittbohrung und Kiesgasse (EP 19 61 871 A1 "Herstellungsverfahren eines Horizontalfilterbrunnen und Brunnen an sich"), offene Verlegung in Gräben etc.) vorgetrieben, eingespült, geschlitzt bzw. verlegt. Die Flächenverfügbarkeit, Verlegungstiefe, vorhandene unterirdische Wirtschaft, der Wasserdruck und die Wirtschaftlichkeit bestimmen letztendlich das anzuwendende Verfahren der Filterstrangherstellung. Die Filterstränge 6 können schräg oder horizontal auch deshalb beliebig oft und in der unteren Ebene des Grundwasserleiters angeordnet werden, um somit auf mögliche vertikale Anisotropien (z.B. Fluidbeschaffenheit, geohydraulische Durchlässigkeiten, etc.) optimal angepasst zu werden. Die horizontalen Filterohre 6 werden durch die Schachtwanddurchführung 2 in die Schieberkammer 0 geführt. Außerdem wird damit die Anordnung in mehreren Grundwasserstockwerken getrennt (bei vorhandenen oder nicht vorhandenen Trennstauern oder Geringleitern) möglich, insofern dies fachlich und somit wasserrechtlich möglich ist. Aus dem Porengrundwasserleiter zugeführtes Grundwasser für Kältezwecke wird über das in den Innenbereich des Schachtbauwerks 31 geführte Filterstrangende 6, der Schieberkammer 0 und dem geöffneten Schieber 3 zugeführt. Der Grundwasserstand spiegelt sich bei geöffneten Schiebern 3 der unteren Ebene im Standrohr 47 aus. Durch die Schieberkammer 0 kann ebenfalls die Säurespülleitung 12 oder Piezometerleitung mit 2- oder 3-Wegeventilen angeordnet werden. Über sie können Regeneriermaßnahmen im Ringbereich des horizontalen Filterrohres unterstützt werden durch chem. Säuerung. Als Piezometerleitung dienen sie der Druckpotentialmessung im Filterkies und somit zur präventiven Feststellung der Brunnenalterung.

Die untere drucklose Kammer 50 (Fluidkammer unterer Filterbereich) beherbergt alle Filterstränge 6 der unteren Grundwasserebene. Bei Montage von Klappe mit Spindelantrieb anstelle der Schieber 3 mit Spindelantrieb können die Zuflussmengen der einzelnen Filterstränge gedrosselt werden, um somit den Bedarf der segmentierten Erfassung des Grundwassers im Umkreis der Brunnenanlage zu entsprechen.

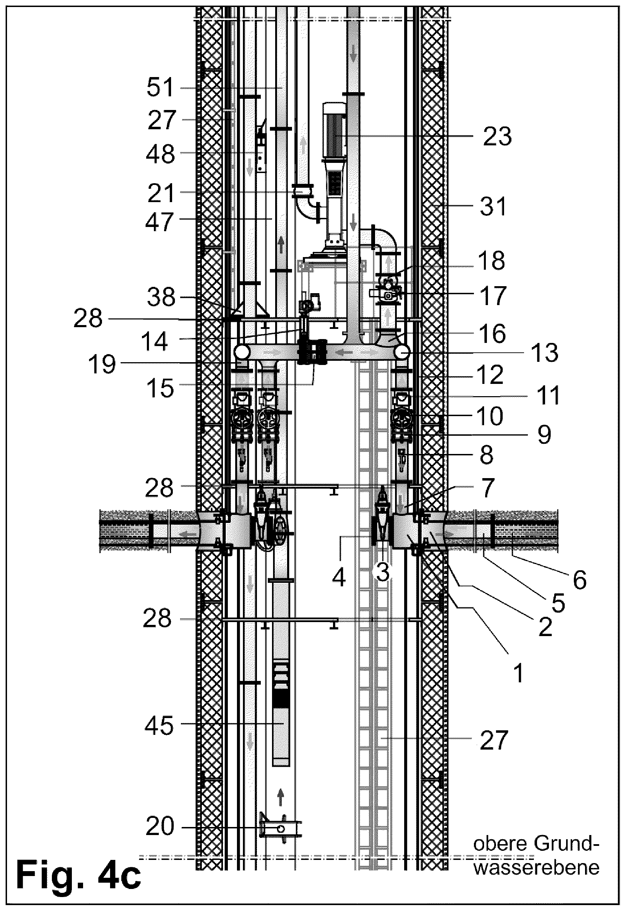

Gem. **Fig. 4c** befindet sich im Standrohr 47, welches über geeignete Tragkonstruktionen 48 fixiert wird, das Grundwasser aus der unteren Ebene und die Unterwassermotorpumpe 45, sowie eine unterhalb dieser Pumpe befindliche Klappe 20 mit Bediengestänge. Das Grundwasser für Kühlungszwecke wird über die Kaltwasser-Druckwasserleitung 51 mit Gummikompensator 21 zur Klimaanlage geleitet. (siehe **Fig. 4c**).

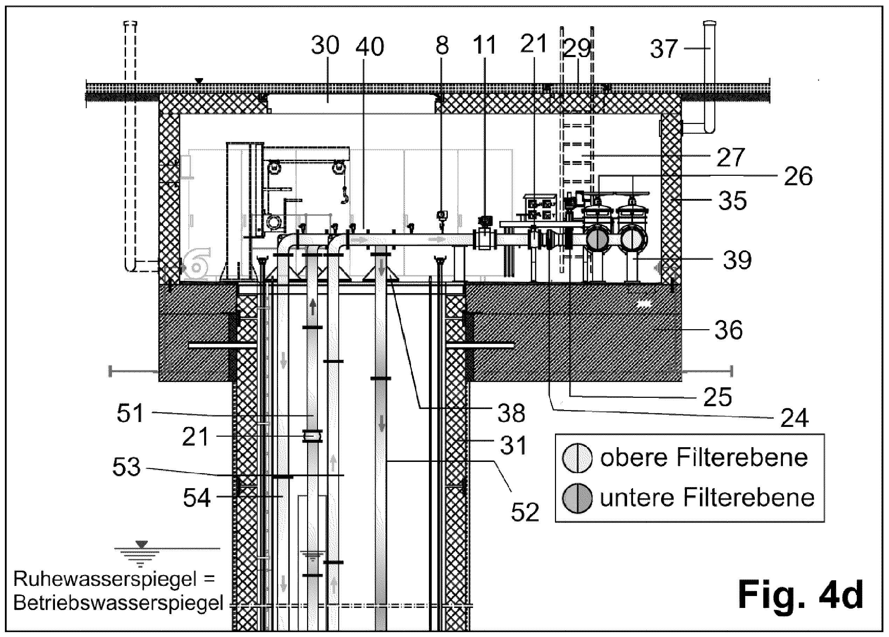

**Fig. 4d** zeigt den oberen Teil des Senkschachtes 31 und die Brunnenstube 35. Alle vertikalen Druckleitungen ("Kaltwasser-Druckleitung" untere Grundwasserebene 51, "Kaltwasser-Druckleitung" obere Grundwasserebene 52, "Warmwasser-Druckleitung" obere Grundwasserebene 53, "Warmwasser-Druckleitung" untere Grundwasserebene 54) werden über Abfangteller (Pumpenstuhl) 38 gehalten und über horizontalen Druckleitungen mit Messapparaturen, der Magnetisch-Induktive-Durchflussmesser (MID) 11, Temperatursonde 40 und Druckmesser 8, sowie einem Rückflussverhinderer 24 und elektrisch-getriebene Plattenschieber 25 zur Sammelleitung mit Handschiebern 26 der Kältemaschine (Wärmetauschanordnung) (brunnenextern, deshalb hier nicht abgebildet) geführt.

Nach dem Entzug der Kälte aus dem Grundwasser der unteren Grundwasserebene wird das um ca. 3-6 Kelvin erwärmte Grundwasser (andere Temperaturspreizungen sind möglich) wieder in der Brunnenstube über die "Kaltwasser-Druckrohrleitung" 52 dem Grundwasserleiter, obere Grundwasserebene, zurückgeführt. Dazu wird in **Fig. 4d** der Plattenschieber 25 der "Warmwasser-Druckleitung" 53 und 54 geschlossen und der Plattenschieber 25 der "Kaltwasser-Druckleitung" obere Grundwasserebene 52 automatisch mittels E-Antrieb (wahlweise auch per Hand möglich) geöffnet.

Das von der Wärmequelle/Kältemaschine (Wärmetauschanordnung) kommende Grundwasser wird somit über die obere Filterebene 6 in die obere Ebene des Grundwasserleiters Ebene infiltriert. Die Kontrolle von Infiltrationsmengen, Temperatur und Drücke wird in der Brunnenstube befindlichen Messgeräte MID 11, Temperatursonde 9 und Drucksonde 8 vorgenommen. Ebenso kann dies in der oberen Ebene, die im vorliegenden Konstruktionsbeispiel trocken ausgebaut wird, erfolgen.

Bei Nutzung des HZBr in Kombination einer Trocken- und Nassaufstellung gemäß **Fig. 4a** zur Wärmenutzung aus Grundwasser wird die eben beschriebene Betriebsweise umgekehrt. Aus den oberen Filtersträngen 6 der oberen Grundwasserebene gem. **Fig. 4c** gelangt das Grundwasser durch die Vollrohrstrecke 5, durch die Schachtwanddurchführung 2, die Schieberkammer 1, den Stranganschlussleitungen (Stutzen) 7, über Magnetisch-Induktivem Durchflussmesser (MID) 11, vorbei an Druck- und Temperatursonden (8, 9) zur Ringleitung 13. Der elektrisch-gesteuerte Schieber 17 ist nunmehr geöffnet und der elektrisch-gesteuerte Schieber 20 (**Fig. 4b**) geschlossenen. Somit gelangt das Grundwasser der oberen Ebene über den Sattelstutzen 16 der Ringleitung 13 zum Gummikompensator 18 und zur Warmwasser-Pumpe 23. Das Grundwasser der oberen Ebene wird über die "Warmwasser-Druckleitung" 53, in **Fig. 4d** in die Brunnenstube 35, weiter an Druck- und Temperatursonde (8, 40) vorbei, durch MID 11, Gummikompensator 21, Rückflussverhinderer 24, elektrisch-gesteuertem Schieber 25 zur Wärmepumpe (hier außerhalb Brunnenstube, deshalb nicht dargestellt) gefördert. Das genutzte Grundwasser wird abgekühlt über die "Warmwasser-Druckleitung" 54 untere Grundwasserebene in die untere horizontale Filterebene 6 geführt.

Die dafür erforderlichen Schieberstellungen sind adäquat vorzunehmen. Die Leitungen 51 und 52 sind mit den Schiebern 25 in der Brunnenstube 35 (**Fig. 4d**) und die Klapper 20 (**Fig. 4b**) im Standrohr 47 unterhalb der Unterwassermotorpumpe 45 sind zu schließen. Mit dem Verschließen der Klappe 20 wird ein nicht beabsichtigter Anstieg des Wasserspiegels im Standrohr 47 verhindert. Somit kann das abgekühlte Grundwasser nach der Wärmepumpe über die Druckleitung 54 in die unteren Filterstränge dem Grundwasser der unteren Ebene zugeführt werden.

Im Ergebnis wird also eine Zirkulationsleitung gebildet, mit der gehobenes Grundwasser nach einer Verwertung wieder in den Grundwasserleiter reinfiltriert wird. Die Verwertung findet dabei über die an der Zirkulationsleitung eingebundene Wärmetauschanordnung statt.

Anstelle oder zugleich der oben für die verschiedenen Varianten der Horizontalfilterbrunnen beschriebenen thermischen Verwertung des Grundwassers kann auch eine anderweitige Verwertung erfolgen. In nicht dargestellten Ausführungen kann bei den oben aufgeführten Varianten der Horizontalfilterbrunnen anstelle der Wärmetauschanordnung eine Stoffaustauschanordnung eingesetzt wird. Mit dieser Stoffaustauschanordnung wird dem Grundwasser ein Stoff entnommen oder zugeführt. Ein entnommener Stoff kann dabei als Rohstoff extrahiert werden. Ein zugeführter Stoff kann so gewählt werden, dass dieser eine Dekontamination und/oder eine Rohstoffgewinnung aus einer Feststoffmatrix und/oder einer anderen Fluidphase des Grundwassers mobilisiert. Beispielsweise kann der eine Dekontamination mobilisierende Stoff ein in dem Grundwasser mikrobielle Prozesse stimulierender Stoff sein, der natürliche Abbauprozesse zur Altlastensanierung anregt oder verstärkt. Beispielsweise ist der zugeführte Stoff Sauerstoff, der im Bereich des zweiten Filterstrangs in dem Grundwasserleiter eine Eisen- und/oder Manganausfällung induziert.

### Bezugszeichenliste

- 1: Schieberkammer, Standard Ausführung
- 2: Schachtwanddurchführung
- 3: Absperrschieber
- 4: X-Stück, mit Plexiglasscheibe
- 5: Vollrohr
- 6: Filterrohre als Schlitzbrückenfilter
- 7: Stutzen, angeschweißt an Schieberkammer
- 8: Druckmessung
- 9: Pass- und Ausbaustück
- 10: Absperrschieber mit elektrisch-Antrieb
- 11: MID
- 12: Säurespülleitung und 2-Wege-Ventil
- 13: Ringleitung
- 14: Plattenschieber mit E-Antrieb
- 15: Pass- und Ausbaustück
- 16: Sattelstutzen mit Vorschweißflansch, angeschweißt an Ringleitung
- 17: Absperrschieber mit E-Antrieb
- 18: Gummi-Kompensator, verspannt
- 20: Absperrschieber mit E-Antrieb
- 21: Gummi-Kompensator, verspannt
- 22: Pumpe "untere Grundwasserebene" auf Stahlbetonzwischendecke
- 23: Pumpe "obere Grundwasserebene" auf Wandkonsole
- 24: Rückflussverhinderer
- 25: Plattenschieber mit E-Antrieb
- 26: Absperrschieber mit Handrad in Sammelleitung
- 27: Steigleiter
- 28: Zwischenbühne mit Lichtgitterrostsegmenten auf TT-Trägern
- 29: Schachtabdeckung mit Einstiegskontrolle
- 30: Montageöffnung mit Einstiegskontrolle
- 31: Senkschacht aus Stahlbetonrohr
- 32: Ausgleichssohle mit Pumpensumpf
- 33: Unterwasserbeton
- 34: Schneidschuh als Stahlkonstruktion
- 35: Brunnenstube
- 36: Belastungs- und Auftriebsfundament
- 37: Be- und Entlüftungsrohr
- 38: Abfangteller der Steigleitung (Pumpenstuhl) mit Gummi-Metall-Schiene
- 39: Rohrunterstützung
- 40: Temperatursonde
- 41: Stahlbeton-Zwischendecke
- 42: Tür rund, druckdicht und druckbeständig
- 43: Saugkorb
- 44: Druckkammer
- 45: Druckleitung "untere Gewässerebene"
- 46: Druckleitung "Reinfiltrationsleitung obere Gewässerebene"
- 47: Druckleitung "obere Gewässerebene"
- 48: Druckleitung "Reinfiltrationsleitung untere Gewässerebene"
- 49: FFR-Stück
- 50: Fluidkammer unterer Filterbereich, drucklos
- 51: Druckleitung "untere Gewässerebene"
- 52: Druckleitung "Reinfiltrationsleitung obere Gewässerebene"
- 53: Druckleitung "obere Gewässerebene"
- 54: Druckleitung "Reinfiltrationsleitung untere Gewässerebene"

## Patentansprüche

1. Verfahren zur Verwertung von in einem Grundwasserleiter geführten Grundwasser mittels eines Horizontaltfilterbrunnens, wobei zunächst Grundwasser aus dem Grundwasserleiter über einen in einer ersten Ebene in dem Grundwasserleiter angeordneten ersten Filterstrang des Horizontaltfilterbrunnens gehoben wird und dieses gehobene Grundwasser über eine Zirkulationsleitung einer Wärmetauschanordnung und/oder einer Stoffaustauschanordnung zugeführt wird und anschließend das über die Wärmetauschanordnung und/oder die Stoffaustauschanordnung geführte Grundwasser einen in einer oberhalb oder unterhalb der ersten Ebene liegenden zweiten Ebene in dem Grundwasserleiter angeordneten zweiten Filterstrang zugeführt und wieder in den Grundwasserleiter reinfiltriert wird.

2. Verfahren nach Anspruch 1, **dadurch gekennzeichnet, dass** dem Grundwasser mit der Wärmetauschanordnung Wärmeenergie entnommen oder zugeführt wird.

3. Verfahren nach Anspruch 2, **dadurch gekennzeichnet, dass** durch eine messtechnische Erfassung der Grundwassertemperatur im Grundwasserleiter eine Wärmeentnahme und Wärmezufuhr zum Grundwasser im Grundwasserleiter im langfristigen Mittel thermisch so gestaltet wird, dass eine Grundwassertemperatur im Grundwasserleiter innerhalb eines Temperaturbereichs gehalten oder eine vorgegebene Temperaturveränderung erreicht wird.

4. Verfahren nach Anspruch 1, **dadurch gekennzeichnet, dass** dem Grundwasser mit der Stoffaustauschanordnung ein Stoff entnommen oder zugeführt wird.

5. Verfahren nach Anspruch 4, **dadurch gekennzeichnet, dass** der dem Grundwasser zugeführte Stoff eine Dekontamination und/oder Rohstoffgewinnung aus einer Feststoffmatrix und/oder einer anderen Fluidphase des Grundwassers mobilisiert.

6. Verfahren nach Anspruch 5, **dadurch gekennzeichnet, dass** der eine Dekontamination mobilisierende Stoff ein in dem Grundwasser mikrobielle Prozesse stimulierender Stoff ist, der natürliche Abbauprozesse zur Altlastensanierung anregt oder verstärkt.

7. Verfahren nach Anspruch 5, **dadurch gekennzeichnet, dass** dem Grundwasser hochtemperierte Wärme zugeführt, wodurch im erhitzten Bereich gebundene Stoffe mobilisiert werden.

8. Verfahren nach Anspruch 5, **dadurch gekennzeichnet, dass** der dem Grundwasser zugeführte Stoff Sauerstoff ist und damit im Bereich des zweiten Filterstrangs in dem Grundwasserleiter Eisen- und/oder Manganausfällungen induziert werden.

9. Vorrichtung zur Verwertung von in einem Grundwasserleiter geführten Grundwasser durch ein Heben des Grundwassers aus dem Grundwasserleiter und ein nach dem Verwerten anschießendes Reinfiltrieren des Grundwassers in den Grundwasserleiter, wobei die Vorrichtung einen Horizontaltfilterbrunnen aufweist, **dadurch gekennzeichnet, dass** der Horizontaltfilterbrunnen einen in einer ersten Ebene in dem Grundwasserleiter angeordneten ersten Filterstrang und einen in einer oberhalb oder unterhalb der ersten Ebene liegenden zweiten Ebene in dem Grundwasserleiter angeordneten zweiten Filterstrang aufweist und dass der erste Filterstrang und der zweite Filterstrang über eine Zirkulationsleitung miteinander verbunden sind eine Wärmetauschanordnung und/oder eine Stoffaustauschanordnung eingebunden ist.

10. Vorrichtung nach Anspruch 9, **dadurch gekennzeichnet, dass** die Zirkulationsleitung eine mit dem ersten Filterstrang verbundene erste Druckleitung, eine mit dem ersten Filterstrang verbundene erste Reinfiltrationsleitung, eine mit dem zweiten Filterstrang verbundene zweite Druckleitung und eine mit dem zweiten Filterstrang verbundene zweite Reinfiltrationsleitung aufweist und dass die erste Druckleitung, die zweite Druckleitung, die erste Reinfiltrationsleitung und die zweite Reinfiltrationsleitung mit der Wärmetauschanordnung und/oder der Stoffaustauschanordnung verbunden sind.

11. Vorrichtung nach Anspruch 9 oder 10, **dadurch gekennzeichnet, dass** der Horizontaltfilterbrunnen in Trockenaufstellung oder in Nassaufstellung ausgeführt ist.

12. Vorrichtung nach Anspruch 9 oder 10, **dadurch gekennzeichnet, dass** der Horizontaltfilterbrunnen als Kombination aus Trockenaufstellung und Nassaufstellung ausgeführt ist, wobei der erste Filterstrang in Trockenaufstellung und der zweite Filterstrang in Nassaufstellung ausgeführt ist oder wobei der erste Filterstrang in Nassaufstellung und der zweite Filterstrang in Trockenaufstellung ausgeführt ist.

13. Vorrichtung nach einem der Ansprüche 11 oder 12, **dadurch gekennzeichnet dass** bei einer Trockenaufstellung der jeweilige Filterstrang über oder unter eine auf oder unter dem Niveau des Grundwasserleiters liegende Ringleitung mit der Zirkulationsleitung oder über eine direkte Rohranbindung mit der Zirkulationsleitung verbunden ist.

14. Vorrichtung nach einem der Ansprüche 11 bis 13, **dadurch gekennzeichnet dass** bei einer Trockenaufstellung der jeweilige Filterstrang über oder unter eine auf oder unter dem Niveau des Grundwasserleiters liegende Druckkammer mit der Zirkulationsleitung oder über eine direkte Rohranbindung mit der Zirkulationsleitung verbunden ist.

15. Vorrichtung nach einem der Ansprüche 9 bis 13, **dadurch gekennzeichnet, dass** die Filterstränge bezogen auf die Waagerechte horizontal oder schräg in dem Grundwasserleiter angeordnet sind.
